(19) Europäisches Patentamt
European Patent Office
Office européen des brevets

(11) **EP 4 776 040 A1**

(12) **EUROPEAN PATENT APPLICATION**
published in accordance with Art. 153(4) EPC

(43) Date of publication:
**15.07.2026 Bulletin 2026/29**

(21) Application number: **24862929.7**

(22) Date of filing: **06.09.2024**

(51) International Patent Classification (IPC):
***G02B 6/12*** *(2006.01)* ***C08F 299/06*** *(2006.01)*
***C08F 299/08*** *(2006.01)* ***C08G 77/04*** *(2006.01)*
***C08G 77/06*** *(2006.01)* ***C08G 77/20*** *(2006.01)*
***G02B 6/122*** *(2006.01)*

(52) Cooperative Patent Classification (CPC):
**C08F 299/06; C08F 299/08; C08G 77/04; C08G 77/06; C08G 77/20; G02B 6/12; G02B 6/122**

(86) International application number:
**PCT/JP2024/032124**

(87) International publication number:
**WO 2025/053280 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.09.2023 JP 2023145239**
**07.09.2023 JP 2023145240**
**29.03.2024 JP 2024058142**
**29.03.2024 JP 2024058143**

(71) Applicant: **Mitsubishi Chemical Corporation**
**Tokyo 100-8251 (JP)**

(72) Inventors:
- **KOSUGE, Takahiro**
  **Tokyo 100-8251 (JP)**
- **ANDO, Naoki**
  **Tokyo 100-8251 (JP)**
- **FUJIMORI, Naomi**
  **Tokyo 100-8251 (JP)**
- **PEI, Lihua**
  **Tokyo 100-8251 (JP)**

(74) Representative: **Hoffmann Eitle**
**Patent- und Rechtsanwälte PartmbB**
**Arabellastraße 30**
**81925 München (DE)**

(54) **OPTICAL WAVEGUIDE AND OPTICAL MEMBER HAVING OPTICAL WAVEGUIDE**

(57) Provided is an optical waveguide including a core portion configured to propagate light and a clad portion having a refractive index lower than that of the core portion. The clad portion has an underclad portion located on one surface of the core portion. In a shape of a cross-section of the core portion in a direction perpendicular to a light propagation direction, (i) H/L is 0.4 to 3, or (ii) a taper angle of the core portion is 50° or more and 130° or less, with the proviso that a width direction is a direction of a line along which the core portion and the underclad portion are in contact with each other, a thickness direction is a direction perpendicular to the width direction, L [μm] is a maximum length of the cross-section of the core portion in the width direction, and H [μm] is a maximum length of the cross-section of the core portion in the thickness direction, and the taper angle of the core portion is an angle formed by the underclad and a tangent line of a core side portion, drawn at its position corresponding to a length of 1/2 of the maximum length of the core portion in the thickness direction. At least one of the core portion or the clad portion is made of a cured product produced by curing an organopolysiloxane-containing composition containing an organopolysiloxane having a specific structure.

Fig. 1

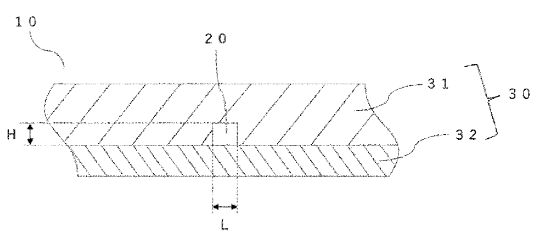


EP 4 776 040 A1

## Description

### Technical Field

The present invention relates to an optical waveguide and an optical member having the optical waveguide.

### Background Art

In the field of communication and the like, along with an increase in the speed of communication, transmission of optical signals by optical waveguides has been attracting attention (Patent Literature 1). Among them, particularly, optical waveguides made of polymers can be fabricated by low-temperature processing processes such as photolithography, and can be easily mounted on a substrate and the like, and therefore, various developments have progressed.

For example, Patent Literature 1 discloses a polymer optical waveguide in which the height and width of a core portion constituting the waveguide are within specific ranges, and attempts have been made to provide a polymer optical waveguide in which the transmission loss of an optical signal is reduced.

### Citation List

### Patent Literature

Patent Literature 1: WO 2018/168783

### Summary of Invention

### Technical Problem

However, in the aforementioned related art, it cannot be said that the reduction of the transmission loss of an optical signal is sufficient, and further reduction of the transmission loss has been required. Depending on the configuration of an optical waveguide, a polarization dependent loss in optical transmission may also be increased, and its transmission loss changes depending on the polarization state of incident light, thereby requiring its improvement.

An object of the present invention is to provide an optical waveguide which has a reduced transmission loss and a low polarization dependent loss.

### Solution to Problem

As a result of diligent investigations, the present inventors have found that an optical waveguide including a core portion and an underclad portion that is partially in contact with the core portion and has a refractive index lower than that of the core portion, in which the core portion having a specific shape of a cross-section, has a reduced transmission loss and a low polarization dependent loss, and thus have completed the present invention.

That is, the gist of the present invention is as follows.

(1) An optical waveguide including:

a core portion configured to propagate light; and
a clad portion having a refractive index lower than that of the core portion,
wherein
the clad portion has an underclad portion partially in contact with the core portion, and
in a shape of a cross-section of the core portion in a direction perpendicular to a light propagation direction, H/L is 0.4 to 3, with the proviso that a width direction is a direction of a line along which the core portion and the underclad portion are in contact with each other, a thickness direction is a direction perpendicular to the width direction, L [$\mu$m] is a maximum length of the cross-section of the core portion in the width direction, and H [$\mu$m] is a maximum length of the cross-section of the core portion in the thickness direction, and
at least one of the core portion or the clad portion is made of a cured product produced by curing an organopolysiloxane-containing composition containing an organopolysiloxane having a polymerizable functional group represented by the following Formula [1]:

$$(R^1R^2R^3SiO_{1/2})_{M1}(R^4R^5R^6SiO_{1/2})_{M2}$$

$$(R^7R^8SiO_{2/2})_{D1}(R^9R^6SiO_{2/2})_{D2}$$

$$(R^{10}SiO_{3/2})_{T1}(R^6SiO_{3/2})_{T2}(SiO_{4/2})_Q$$

$$(O_{1/2}R^{11})_{Y1}(O_{1/2}R^6)_{Y2} \cdots \quad [1]$$

where
$R^1$ to $R^5$, and $R^7$ to $R^{11}$ are each independently at least one type of group selected from the group consisting of an organic group and a hydrogen atom;
$R^1$ to $R^3$, $R^7$, $R^8$, $R^{10}$ and $R^{11}$ are free of a polymerizable functional group;
$R^6$ is at least one type of organic group containing a polymerizable functional group, and when a plurality of $R^6$ groups are present, they may be the same or different from each other; and $0 \leq M1$, $0 \leq D1$, $0 \leq T1$, $0 \leq Y1$, $0 \leq Y2$, $0 \leq Q$,

$$0 < M2 + D2 + T2,$$

$$0 < D1 + D2 + T1 + T2 + Q,$$

and

$$M1 + M2 + D1 + D2 + T1 + T2 + Q = 1$$

are satisfied.

(2) An optical waveguide including:

a core portion configured to propagate light; and
a clad portion having a refractive index lower than that of the core portion,
wherein
the clad portion has an underclad portion partially in contact with the core portion, and
in a shape of a cross-section of the core portion in a direction perpendicular to a light propagation direction, a taper angle of the core portion is 50° or more and 130° or less, with the proviso that a width direction is a direction of a line along which the core portion and the underclad portion are in contact with each other, a thickness direction is a direction perpendicular to the width direction, and the taper angle is an angle formed by the underclad and a tangent line of a core side portion, drawn at its position corresponding to a length of 1/2 of a maximum length of the core portion in the thickness direction, and
at least one of the core portion or the clad portion is made of a cured product produced by curing an organopolysiloxane-containing composition containing an organopolysiloxane having a polymerizable functional group represented by the following Formula [1]:

$$(R^1R^2R^3SiO_{1/2})_{M1}(R^4R^5R^6SiO_{1/2})_{M2}$$

$$(R^7R^8SiO_{2/2})_{D1} (R^9R^6SiO_{2/2})_{D2}$$

$$(R^{10}SiO_{3/2})_{T1}(R^6SiO_{3/2})_{T2}(SiO_{4/2})_Q$$

$$(O_{1/2}R^{11})_{Y1}(O_{1/2}R^6)_{Y2} \cdots \quad [1]$$

where
$R^1$ to $R^5$, and $R^7$ to $R^{11}$ are each independently at least one type of group selected from the group consisting of an organic group and a hydrogen atom;
$R^1$ to $R^3$, $R^7$, $R^8$, $R^{10}$ and $R^{11}$ are free of a polymerizable functional group;
$R^6$ is at least one type of organic group containing a polymerizable functional group, and when a plurality of $R^6$ groups are present, they may be the same or different from each other; and $0 \leq M1$, $0 \leq D1$, $0 \leq T1$, $0 \leq Y1$, $0 \leq Y2$, $0 \leq Q$,

$$0 < M2 + D2 + T2,$$

$$0 < D1 + D2 + T1 + T2 + Q,$$

and

$$M1 + M2 + D1 + D2 + T1 + T2 + Q = 1$$

are satisfied.

(3) The optical waveguide according to (1) or (2), wherein a difference in refractive index between the core portion and the clad portion is 0.005 or more and 0.05 or less.

(4) The optical waveguide according to any one of (1) to (3), wherein in the shape of the cross-section of the core portion in a direction perpendicular to the light propagation direction, the underclad portion has a length of 1 μm or more in the thickness direction of the underclad portion.

(5) The optical waveguide according to any one of (1) to (4), wherein the clad portion has an overclad portion present in a portion of the core portion not in contact with the underclad portion.

(6) The optical waveguide according to any one of (1) to (5), wherein a refractive index of the core portion at a wavelength of 1300 nm is 1.400 or more and 1.520 or less.

(7) The optical waveguide according to any one of (1) to (6), wherein the organopolysiloxane having a polymerizable functional group is represented by the following Formula [2]:

$$(R^1R^2R^3SiO_{1/2})_{M1}(R^4R^5R^6SiO_{1/2})_{M2}$$

$$(R^7R^8SiO_{2/2})_{D1}\ (R^9R^6SiO_{2/2})_{D2}$$

$$(R^{10}SiO_{3/2})_{T1}(R^6SiO_{3/2})_{T2}(SiO_{4/2})_Q$$

$$(O_{1/2}R^{11})_{Y1}(O_{1/2}R^6)_{Y2} \cdots \qquad [2]$$

where

$R^1$ to $R^5$, and $R^7$ to $R^{11}$ are each independently at least one type of group selected from the group consisting of an organic group and a hydrogen atom;

$R^1$ to $R^3$, $R^7$, $R^8$, $R^{10}$ and $R^{11}$ are free of a polymerizable functional group;

$R^6$ is at least one type of organic group containing a polymerizable functional group, and when a plurality of $R^6$ groups are present, they may be the same or different from each other; and $0 \leq M1$, $0 \leq D1$, $0 \leq T1$, $0 \leq Y1$, $0 \leq Y2$,

$$0 \leq Q,$$

$$0 < M2 + D2 + T2,$$

and

$$M1 + M2 + D1 + D2 + T1 + T2 + Q = 1$$

are satisfied.

(8) The optical waveguide according to any one of (1) to (6), wherein the organopolysiloxane having a polymerizable functional group is represented by the following Formula [3]:

$$(R^1R^2R^3SiO_{1/2})_{M1}(R^4R^5R^6SiO_{1/2})_{M2}$$

$$(R^7R^8SiO_{2/2})_{D1}\ (R^9R^6SiO_{2/2})_{D2}$$

$$(R^{10}SiO_{3/2})_{T1}(R^6SiO_{3/2})_{T2}$$

$$(O_{1/2}R^{11})_{Y1}(O_{1/2}R^6)_{Y2} \cdots \qquad [3]$$

where

$R^1$ to $R^5$, and $R^7$ to $R^{11}$ are each independently at least one type of group selected from the group consisting of an

organic group and a hydrogen atom;
$R^1$ to $R^3$, $R^7$, $R^8$, $R^{10}$ and $R^{11}$ are free of a polymerizable functional group;
$R^6$ is at least one type of organic group containing a polymerizable functional group, and when a plurality of $R^6$ groups are present, they may be the same or different from each other; and $0 \leq M1$, $0 \leq D1$, $0 \leq T1$, $0 \leq Y1$, $0 \leq Y2$,

$$0 < D1 + D2 + T1 + T2,$$

$$0 < M2 + D2 + T2,$$

and

$$M1 + M2 + D1 + D2 + T1 + T2 = 1$$

are satisfied.

(9) The optical waveguide according to any one of (1) to (6), wherein $0.02 \leq Y1 \leq 0.25$ is satisfied in Formula [1].
(10) The optical waveguide according to any one of (1) to (6), wherein $0 < M2 + D2 + T2 \leq 0.25$ is satisfied in Formula [1].
(11) The optical waveguide according to any one of (1) to (6), wherein $0.12 < M2 + D2 + T2 \leq 0.25$ is satisfied in Formula [1].
(12) The optical waveguide according to (7), wherein $0.02 \leq Y1 \leq 0.25$ is satisfied in Formula [2].
(13) The optical waveguide according to (7) or (12), wherein $0.04 \leq Q$ is satisfied in Formula [2].
(14) The optical waveguide according to (8), wherein $0 < D1 + D2$ is satisfied in Formula [3].
(15) The optical waveguide according to (8) or (14), wherein $0.1 < D1 + D2$ is satisfied in Formula [3].
(16) The optical waveguide according to (8), (14), or (15) above, wherein $0 < D1$ is satisfied in Formula [3].
(17) The optical waveguide according to any one of (8) and (14) to (16), wherein $0.02 \leq Y1 \leq 0.25$ is satisfied in Formula [3].
(18) The optical waveguide according to any one of (8) and (14) to (17), wherein $0 < T1 + T2$ is satisfied in Formula [3].
(19) The optical waveguide according to any one of (8) and (14) to (18), wherein $0 < D1 + D2$ and $0 < T1 + T2$ are satisfied in Formula [3].
(20) The optical waveguide according to any one of (1) to (19), wherein $R^6$ contains a polymerizable alkenyl group.
(21) The optical waveguide according to any one of (1) to (20), wherein $R^6$ contains an acryloyl group and/or a methacryloyl group.
(22) The optical waveguide according to any one of (1) to (21), wherein the organopolysiloxane having a polymerizable functional group is free of an aromatic structure.
(23) The optical waveguide according to any one of (1) to (22), wherein $R^6$ is an acryloyloxypropyl group and/or a methacryloyloxypropyl group.
(24) The optical waveguide according to any one of (1) to (23), which is for use in single mode.
(25) An optical member having the optical waveguide described in any one of (1) to (24) above.

## Advantageous Effects of Invention

According to the present invention, an optical waveguide having a reduced transmission loss and a low polarization dependent loss, and an optical member having the optical waveguide, can be provided.

## Brief Description of Drawings

FIG. 1 is a view illustrating a configuration example of a shape of a cross-section of an optical waveguide of one aspect of the present invention.
FIG. 2 is a view illustrating an example of a taper angle of a core portion of an optical waveguide of another aspect of the present invention.

## Description of Embodiments

Embodiments of the present invention (hereinafter may be referred to as the present embodiments) will be described in detail below, but the following description is examples of the embodiments, and the present invention is in no way limited thereto.

In the present invention, "(meth)acryl" means "one or both of acryl and methacryl".

A numerical range represented by using "to" in the present invention means a range including the numerical values stated before and after "to" as a lower limit value and an upper limit value.

In the present invention, the weight-average molecular weight means a weight-average molecular weight (Mw) by a gel permeation chromatography (GPC) using polystyrene calibration.

Optical Waveguide

The optical waveguide of the present invention will be described below with reference to the drawings.

FIG. 1 is a view illustrating an example of the configuration of a shape of a cross-section of the optical waveguide of the present invention. In FIG. 1, the light propagation direction is a direction from the front side to the back side of the paper surface or from the back side to the front side of the paper surface, that is, FIG. 1 is a view illustrating the shape of the cross-section of the optical waveguide in a direction perpendicular to the light propagation direction.

An optical waveguide 10 shown in FIG. 1 has a core portion 20 and a clad portion 30 having a refractive index lower than that of the core portion 20. The clad portion 30 is made of an underclad portion 32 at least partially in contact with the core portion 20 (a lower portion of the core portion in FIG. 1), and an overclad portion 31 present in portions of the core portion 20 not in contact with the underclad portion (an upper portion and left and right portions of the core portion in FIG. 1).

In the present invention, the underclad portion is partially in contact with the core portion, and the overclad is arranged on a portion of the core portion not in contact with the underclad portion, but the terms "underclad" and "overclad" are merely used for convenience. For example, in one aspect of the present invention, a portion covering the lower part of the core may be referred to as an underclad, and a portion covering the upper part of the core may also be referred to as an overclad, and in another aspect, a portion covering the lower part of the core may be referred to as an overclad, and vice versa. In another aspect of the present invention, the two may be integrated.

In the optical waveguide 10, the difference in refractive index between the core portion and the clad portion is preferably 0.005 or more and 0.05 or less. A small difference in refractive index between the core portion and the clad portion facilitates wave guiding in single mode in the optical waveguide 10. Also, a difference made in refractive index between the core portion and the clad portion tends to allow reduction of light scattering that occurs when the optical waveguide is bent.

The lower limit value of the refractive index difference is more preferably 0.01 or more. The upper limit value is more preferably 0.03 or less. For example, in the case of a near-infrared single-mode optical signal, the refractive index difference is preferably 0.01 to 0.05, more preferably 0.01 to 0.04, and still more preferably 0.01 to 0.03.

In a shape of the cross-section of the optical waveguide shown in FIG. 1, when a width direction is the direction of the line along which the core portion 20 and the underclad portion 32 are in contact with each other, L represents the maximum length [μm] of the core portion 20 in the width direction, and when a thickness direction is a direction perpendicular to the width direction, H represents the maximum length [μm] of the core portion 20 in the thickness direction (hereinafter, they may be simply referred to as L and H).

The optical waveguide of the first aspect of the present invention (hereinafter may also be referred to as the optical waveguide of the first aspect) is required to have H/L in the range of 0.4 to 3. Within the above disclosed range of H/L, the difference in transmission loss between orthogonal polarization and parallel polarization is reduced, allowing reduction of a polarization dependent loss.

The H/L is preferably 0.5 or more, more preferably 0.7 or more, and is preferably 2 or less, more preferably 1.5 or less.

The optical waveguide of the first aspect may have sections having different H as long as the ratio H/L satisfies the above disclosed range. For example, H may be different between one end and the other end of the optical waveguide. Also, H may be different between both ends of the optical waveguide and an intermediate section of the core portion in the light propagation direction.

The optical waveguide of the first aspect may have sections having different L as long as H/L satisfies the above range. For example, L may be different between one end and the other end of the optical waveguide. The L may also be different between both ends of the optical waveguide and an intermediate section of the core portion in the light propagation direction.

In a shape of the cross-section of the core portion in a direction perpendicular to a light propagation direction, the optical waveguide of the second aspect of the present invention (hereinafter may also be referred to as the optical waveguide of the second aspect) is required to have a constant value of a taper angle of the core portion, with the proviso that a width direction is a direction of a line along which the core portion and the underclad portion are in contact with each other, a thickness direction is a direction perpendicular to the width direction, and a taper angle of the core portion is an angle formed by the underclad and a tangent line of a core side portion, drawn at its position corresponding to a length of 1/2 of a maximum length of the core portion in the thickness direction and the underclad. For example, when the shape of the core side portion (i) from its contact point with the underclad portion to its position corresponding to a length of 1/2 of the

maximum length of the core portion in the thickness direction is a straight line, a tangent line of the core side portion, that is, an angle formed by the core side portion (i) and the underclad is the taper angle of the core portion. When the shape of the core side portion (ii) from its contact point with the underclad portion to its position corresponding to a length of 1/2 of the maximum length of the core portion in the thickness direction is a curve, an angle formed by a tangent line of the core side portion (ii) and the underclad is the taper angle of the core portion.

In a shape of the cross-section of the core portion in a direction perpendicular to a light propagation direction, when the taper angles of the left and right sides of the core are different, the smaller angle is set as the taper angle of the core in the present embodiment.

For example, in the shape of the cross-section of the optical waveguide shown in FIG. 2, a point A is taken on a side portion of a core portion 20 (that is, the core side portion (i)), which is situated at the position corresponding to a length of 1/2 of the maximum length H in the thickness direction of the core portion 20. An angle 40 formed by a straight line in contact with the core portion 20 at the point A and the underclad portion 32 is a taper angle on the left side of the core portion 20. Although not described in detail, when the taper angle on the left side is different from the taper angle on the right side of the core portion shown in FIG. 2 (an angle formed by the tangent line of the core side portion (ii) and the underclad is the taper angle of the core portion), the smaller angle is the taper angle of the core portion 20 as described above.

In the optical waveguide of the second aspect, the taper angle is required to be 50° or more and 130° or less. When the taper angle is out of the range, the difference in transmission loss between orthogonal polarization and parallel polarization cannot be reduced, and the polarization dependent loss cannot be reduced.

The lower limit of the taper angle is preferably 70° or more, more preferably 80° or more, and the upper limit is preferably 110° or less and more preferably 100° or less.

The optical waveguide of the second aspect may have sections having different maximum length H in the thickness direction of the core portion as long as the taper angle satisfies the above disclosed range. For example, the maximum length H in the thickness direction of the core portion may be different between one end and the other end of the optical waveguide. The maximum length H in the thickness direction of the core portion may be different between both ends of the optical waveguide and an intermediate section in the light propagation direction of the core portion.

The optical waveguide of the second aspect may have a section in which L is different as long as the taper angle satisfies the above disclosed range. For example, L may be different between one end and the other end of the optical waveguide. Further, L may be different between both ends of the optical waveguide and the intermediate section in the light propagation direction of the core portion.

In the optical waveguides of the first aspect and second aspect of the present invention (hereinafter may be referred to as the waveguides of both aspects), H is preferably 1.0 to 10 μm, and L is preferably 1.0 to 15 μm. When H and L are within the range, light in a higher order mode is less likely to be propagated at wavelengths of 1310 nm and 1550 nm, and light tends to propagate in single mode. H is more preferably 3 to 10 μm and still more preferably 3 to 8 μm. L is more preferably 3 to 10 μm and still more preferably 3 to 8 μm.

H and L can be specified by cutting out the optical waveguide and observing the shape of the cross-section of the core, for example, using a scanning electron microscope (SEM).

In the case of an optical waveguide having a configuration in which a plurality of the core portions are arranged in parallel with respect to the clad portion, a core portion may be partially present, in which the maximum length (H) in the thickness direction of the core portion and the maximum length (L) in the width direction of the core portion do not satisfy the above disclosed ranges. A specific example of the core portion in which the above disclosed range is not satisfied includes a core portion to be used for positioning upon connection of an optical waveguide.

The length of the underclad portion 32 in the thickness direction is preferably 1 μm or more, more preferably 5 μm or more, and particularly preferably 10 μm or more.

The underclad portion 32 having a length of 1 μm or more in the thickness direction efficiently inhibits diffusion of light to the outside of the core portion, allowing the transmission loss to be reduced.

In order to guide light in single mode inside the core portion, an overclad portion 31 is preferably present on the upper portion and the left and right sides of the core portion 20. In a case in which the overclad portion 31 is not present, air serves as an overclad, but the difference in refractive index between the core portion and air is large, making single-mode waveguiding difficult.

In case of connecting the optical waveguide to a silica-based optical fiber, a smaller difference in refractive index between the core portion of the optical waveguide and a silica-based optical fiber core portion inhibits end face reflection at a connected portion. In general, the refractive index of the silica-based optical fiber core portion at a near-infrared wavelength is approximately 1.4 to 1.5, and when the refractive index of the core portion of the optical waveguide at a near-infrared wavelength is 1.40 to 1.50 and more preferably 1.42 to 1.48, the end face reflection tends to be inhibited. From the viewpoint of inhibiting the end face reflection of near-infrared light, the refractive index of the core portion at a wavelength of 1300 nm is preferably 1.400 or more and 1.520 or less, more preferably 1.420 or more and 1.500 or less, and particularly preferably 1.440 or more and 1.480 or less.

Transmission Loss

The optical waveguides of both aspects are characterized in that they reduce a transmission loss, and the transmission loss particularly at a near-infrared wavelength is preferably 0.40 dB/cm or less, more preferably 0.35 dB/cm or less, still more preferably 0.32 dB or less, and even still more preferably 0.30 dB/cm or less. The transmission loss is measured by a method as described in Examples described below.

In the optical waveguide of both aspects, the constituent materials of the core portion and the clad portion are materials that cause a difference in refractive index such that the refractive index of the clad portion is lower than the refractive index of the core portion, and at least one of the core portion or the clad portion is required to be made of a cured product produced by curing an organopolysiloxane-containing composition containing an organopolysiloxane having a polymerizable functional group (hereinafter may be simply referred to as "organopolysiloxane") represented by the following Formula [1].

$$(R^1R^2R^3SiO_{1/2})_{M1}(R^4R^5R^6SiO_{1/2})_{M2}$$

$$(R^7R^8SiO_{2/2})_{D1}\ (R^9R^6SiO_{2/2})_{D2}$$

$$(R^{10}SiO_{3/2})_{T1}(R^6SiO_{3/2})_{T2}(SiO_{4/2})_Q$$

$$(O_{1/2}R^{11})_{Y1}(O_{1/2}R^6)_{Y2} \cdots \qquad [1]$$

In Formula [1], $R^1$ to $R^5$, $R^7$ to $R^{11}$ are each independently at least one type of group selected from the group consisting of an organic group and a hydrogen atom.

$R^1$ to $R^3$, $R^7$, $R^8$, $R^{10}$ and $R^{11}$ are free of a polymerizable functional group.

$R^6$ is at least one type of organic group containing a polymerizable functional group, and when a plurality of $R^6$ groups are present, they may be the same or different from each other; and
$0 \leq M1$, $0 \leq D1$, $0 \leq T1$, $0 \leq Y1$, $0 \leq Y2$, $0 \leq Q$,

$$0 < M2 + D2 + T2,$$

$$0 < D1 + D2 + T1 + T2 + Q$$

, and

$$M1 + M2 + D1 + D2 + T1 + T2 + Q = 1$$

are satisfied.

In General Formula [1], the coefficients M1, M2, D1, D2, T1, T2, and Q represent proportions (based on an amount by mole) of respective structures when M1 + M2 + D1 + D2 + T1 + T2 + Q = 1. In General Formula [1], the coefficients Y1 and Y2 represent the relative content rates (based on an amount by mole) of $(O_{1/2}R^{11})$ and $(O_{1/2}R^6)$, respectively, when M1 + M2 + D1 + D2 + T1 + T2 + Q = 1.

In General Formula [1], the coefficients M1 and M2 represent the proportion of so-called M unit silicon ($SiO_{1/2}$) (hereinafter may be simply referred to as "M unit") having one oxygen atom bonded to a silicon atom. Similarly, D1 and D2 represent the proportion of D unit silicon ($SiO_{2/2}$) having two oxygen atoms bonded to a silicon atom (hereinafter may be simply referred to as "D unit"), T1 and T2 represent the proportion of T unit silicon ($SiO_{3/2}$) having three oxygen atoms bonded to a silicon atom (hereinafter, may be simply referred to as "T unit"), and Q represents the proportion of Q unit silicon ($SiO_{4/2}$) having four oxygen atoms bonded to a silicon atom (hereinafter, may be simply referred to as "Q unit").

M2, D2, and T2 represent the proportions of the M unit, the D unit, and the T unit, respectively, in which $R^6$, that is, an organic group containing a polymerizable functional group is bonded to a silicon atom.

Y1 means the content rate of a structure free of a polymerizable functional group and having a group selected from the group consisting of an organic group and a hydrogen atom, specifically, an alkoxy group or a silanol group, and Y2 means the content rate of an organic group containing a polymerizable functional group bonded to a silicon atom.

$0 \leq M1$, $0 \leq D1$, $0 \leq T1$, $0 \leq Y1$, $0 \leq Y2$, and $0 \leq Q$ mean that M1, D1, T1, Y1, Y2 and Q are each 0 or more, respectively, and that M1, D1, T1, Y1, Y2 and Q may be 0, respectively, that is, the structural unit may be absent.

$0 < M2 + D2 + T2$ means that the organopolysiloxane has at least one of the M unit, the D unit, or the T unit in which $R^6$, that is, an organic group containing a polymerizable functional group is bonded to a silicon atom.

$0 < D1 + D2 + T1 + T2 + Q$ means that the organopolysiloxane has at least one of the D unit, the T unit, or the Q unit.

$M1 + M2 + D1 + D2 + T1 + T2 + Q = 1$ means that the total proportion of the M unit, the D unit, the T unit, and the Q unit is 1.

M2 + D2 + T2

In the organopolysiloxane represented by Formula [1], when $0 < M2 + D2 + T2$ is satisfied, a polymerizable functional group is contained in the organopolysiloxane, allowing a cured product to be easily produced using a composition containing a polymerization initiator described later. The too low content rate of the polymerizable functional group may cause curing failure upon preparation of a cured product, and deteriorates compatibility with other components to be added to an organopolysiloxane-containing composition described below. From these viewpoints, M2, D2, and T2 preferably satisfy $0.10 < M2 + D2 + T2$, and more preferably $0.12 \leq M2 + D2 + T2$.

In the present invention, on the other hand, the upper limit of the value of M2 + D2 + T2 has two embodiments in both aspects as follows.

In the first embodiment, the too high proportion of the value of M2 + D2 + T2 results in the high content of the polymerizable functional group, and in terms of increasing a likelihood of a cured product becoming brittle due to its high crosslinking density, M2, D2, and T2 preferably satisfy $M2 + D2 + T2 \leq 0.75$ and more preferably $M2 + D2 + T2 \leq 0.60$.

In the second embodiment, in addition to the above disclosed effects, from the viewpoint of providing an organopolysiloxane having excellent heat resistance and a lower refractive index in a near-infrared region, M2, D2, and T2 preferably satisfy $M2 + D2 + T2 \leq 0.25$, and more preferably $M2 + D2 + T2 \leq 0.20$.

As described above, in the first embodiment, M2, D2, and T2 preferably satisfy $0.10 \leq M2 + D2 + T2 \leq 0.75$ and more preferably $0.12 \leq M2 + D2 + T2 \leq 0.60$, and in the second embodiment, M2, D2, and T2 preferably satisfy $0 < M2 + D2 + T2 \leq 0.25$, more preferably $0.10 \leq M2 + D2 + T2 \leq 0.25$, still more preferably $0.12 \leq M2 + D2 + T2 \leq 0.25$, even still more preferably $0.12 < M2 + D2 + T2 \leq 0.25$, and yet even still more preferably $0.12 < M2 + D2 + T2 \leq 0.20$.

Q Unit

The Q unit is in a form in which silicon has been most oxidized, and the Q unit being contained in the structure of the organopolysiloxane can enhance the heat resistance of a cured product. The Q unit is also contained in quartz, and in a case in which the organopolysiloxane has the Q unit, a cured product having a refractive index close to that of a core material of a near infrared single mode silica-based optical fiber can be produced using a composition containing the organopolysiloxane.

The organopolysiloxane represented by Formula [1] may or may not have a Q unit, but from the viewpoint of improving the heat resistance of a cured product of the organopolysiloxane, it is preferable to have the Q unit, that is, $Q > 0$, and on the other hand, from the viewpoint of improving the flexibility of the cured product of the organopolysiloxane, it is preferable not to have a Q unit, that is, $Q = 0$.

In one embodiment of the present invention, when the organopolysiloxane has the Q unit, the coefficient Q is preferably larger than 0, more preferably 0.04 or more, more preferably 0.10 or more, and still more preferably 0.30 or more. On the other hand, a large number of Q units in the organopolysiloxane results in solidification or high viscosity to cause lowering handleability, and thus, the upper limit is usually 0.65 or less, more preferably 0.6 or less, and still more preferably 0.45 or less.

As described above, when the organopolysiloxane represented by Formula [1] has the Q unit, the coefficient Q preferably satisfies $0 < Q \leq 0.65$, more preferably $0.04 \leq Q \leq 0.6$, and still more preferably $0.04 \leq Q \leq 0.45$.

D1 + D2 + T1 + T2 + Q

In the organopolysiloxane represented by Formula [1], when $0 < D1 + D2 + T1 + T2 + Q$, a constituent unit other than the M unit can be introduced into the organopolysiloxane, which is advantageous from the viewpoint of curability and heat resistance after curing of the organopolysiloxane. D1, D2, T1, T2, and Q preferably satisfy $0.01 < D1 + D2 + T1 + T2 + Q$, more preferably $0.1 < D1 + D2 + T1 + T2 + Q$, and still more preferably $0.2 < D1 + D2 + T1 + T2 + Q$. The upper limit is not particularly limited, but is 1 or less according to its definition.

From the viewpoint of improving the heat resistance of a cured product of the organopolysiloxane, it is preferable that "$0 < D1 + D2 + T1 + T2 + Q$" in Formula [1] be replaced with "$0 < Q$", that is, the organopolysiloxane has a Q unit. The above will be described below using Formula [2].

$O_{1/2}R^{11}$

$O_{1/2}R^{11}$ is a structure free of a polymerizable functional group and having a group selected from the group consisting of an organic group and a hydrogen atom, and specifically, it is an alkoxy group and/or a silanol group bonded to a silicon atom. The viscosity of the organopolysiloxane can be controlled by this structural unit, allowing the viscosity to be

adjusted to a viscosity suitable for molding. The silanol group has an effect of increasing viscosity, and the alkoxy group has an effect of decreasing viscosity. The low content rate of the alkoxy group or the silanol group results in the reduced amount of a terminal group having high mobility and the siloxane backbone of rigid cage type, increasing viscosity. On the other hand, the high content rate of the alkoxy group or the silanol group results in the increased amount of a terminal group having high mobility and the siloxane backbone of a flexible random structure, which is not a cage type, thereby reducing viscosity.

Coefficient Y1

The coefficient Y1 indicating the content rate of ($O_{1/2}R^{11}$) is 0 or a positive value. In one aspect, Y1 represents the total content rate of a silanol group and an alkoxy group in the organopolysiloxane, from the definition of $R^{11}$. From the viewpoint of synthesizing an organopolysiloxane described below and adjusting a viscosity necessary for preparation of an organopolysiloxane-containing composition, the range of the coefficient Y1 is preferably 0 or more, more preferably 0.02 or more, still more preferably 0.025 or more, even still more preferably 0.03 or more, and yet even still more preferably 0.035 or more.

From the viewpoint of storage stability and handleability, the upper limit of the coefficient Y1 is preferably 0.25 or less, more preferably less than 0.25, still more preferably 0.2 or less, still more preferably 0.20 or less, even still more preferably 0.15 or less, and particularly preferably 0.1 or less.

As a preferred range, in Formula [1], Y1 satisfies preferably $0.02 \leq Y1 \leq 0.25$, more preferably $0.02 \leq Y1 < 0.25$, still more preferably $0.025 \leq Y1 \leq 0.2$, even still more preferably $0.025 \leq Y1 \leq 0.20$, yet even still more preferably $0.03 \leq Y1 \leq 0.15$, and particularly preferably $0.035 \leq Y1 \leq 0.1$.

Y1 represents a relative value when $M1 + M2 + D1 + D2 + T1 + T2 + Q = 1$.

Coefficient Y2

Y2 is the content rate of at least one type of organic group containing a polymerizable functional group bonded to a silicon atom via an oxygen atom in the organopolysiloxane. The coefficient Y2 indicating the content rate of ($O_{1/2}R^6$) is 0 or a positive value, and it satisfies preferably $Y2 > 0.25$, more preferably $Y2 > 0.30$, and still more preferably $Y2 > 0.35$. When $Y2 > 0.25$ is satisfied, the compatibility with other resins is improved. The organic group containing a polymerizable functional group is more likely to be hydrolyzed by water followed by being eliminated, resulting in an organic group which may have a high water absorption rate. Therefore, it is preferable to use a method that is less likely to be affected by moisture.

On the other hand, in an environment affected by moisture, when Y2 is large, a cured product is likely to be brittle due to moisture, so that Y2 preferably satisfies $Y2 < 0.4$, more preferably $Y2 < 0.3$, and still more preferably $Y2 < 0.2$. Y2 is also preferably 0.

Y2 represents the relative value when $M1 + M2 + D1 + D2 + T1 + T2 + Q = 1$.

Coefficient M1

The M unit not having $R^6$ containing a polymerizable functional group is not an essential constituent element in the organopolysiloxane, but may be contained. Therefore, M1, which is the proportion of the M unit not having $R^6$, may also satisfy $M1 > 0$, and substituting either an alkoxy group or a silanol group of the organopolysiloxane with the M unit tends to be able to improve the storage stability of the organopolysiloxane and reduce its viscosity. From the viewpoint of the storage stability, the coefficient M1 is preferably 0.09 or more, and is usually 0.6 or less, preferably 0.5 or less, and more preferably 0.4 or less.

Coefficient D1

The D unit not having $R^6$ containing a polymerizable functional group is not an essential constituent element in the organopolysiloxane, but the inclusion of such units tends to be able to impart toughness to a cured product. That is, from the viewpoint of imparting toughness to the cured product, D1 preferably satisfies $D1 \geq 0.2$, more preferably $D1 \geq 0.3$, and still more preferably $D1 \geq 0.4$.

On the other hand, the too large content of the D unit not having $R^6$ tends to deteriorate the heat resistance of a cured product. That is, from the viewpoint of inhibiting a deterioration of heat resistance of the cured product, D1 preferably satisfies $D1 \leq 0.5$, more preferably $D1 \leq 0.4$, and still more preferably $D1 \leq 0.3$.

Coefficient T1

The T unit not having $R^6$ containing a polymerizable functional group is not an essential constituent element in the organopolysiloxane, but the inclusion of such a unit tends to enable improvement of compatibility with other components to be added to the organopolysiloxane-containing composition described below. From the viewpoint of improving the compatibility with other components, T1 preferably satisfies $T1 \geq 0.2$, and more preferably $T1 \geq 0.3$.

On the other hand, the too large content of the T unit not having $R^6$ is likely to cause poor curing due to the steric hindrance of the organic group to be introduced, and therefore, from the viewpoint of curability, T1 preferably satisfies $T1 \leq 0.5$, more preferably $T1 \leq 0.4$, and still more preferably $T1 \leq 0.3$.

From the above, each coefficient in Formula [1] preferably satisfies $0 < Q \leq 0.65$, $0 < M2 + D2 + T2 \leq 0.75$, $0.02 \leq Y1 \leq 0.25$, $Y2 < 0.4$, $0 < M1 \leq 0.6$, $D1 \leq 0.7$, and $T1 \leq 0.5$, more preferably $0.04 \leq Q \leq 0.60$, $0.10 \leq M2 + D2 + T2 \leq 0.75$, $0.025 \leq Y1 \leq 0.20$, $Y2 < 0.3$, $0.09 \leq M1 \leq 0.5$, $D1 \leq 0.6$, and $T1 \leq 0.4$, and further preferably $0.04 \leq Q \leq 0.45$, $0.12 \leq M2 + D2 + T2 \leq 0.6$, $0.03 \leq Y1 \leq 0.15$, $Y2 < 0.2$, $0.09 \leq M1 \leq 0.4$, $D1 \leq 0.3$, and $T1 \leq 0.3$.

$R^6$

$R^6$ is at least one type of organic group containing a polymerizable functional group.

The polymerizable functional group of the organopolysiloxane is a reactive functional group that does not substantially react upon preparation of the organopolysiloxane, but reacts by being applied external energy, and causes a polymerization reaction by crosslinking or chain extension of organopolysiloxane molecules. Examples of the external energy include light, heat, and electron beams, and these may be combined for use. When light (active energy rays) is used as the external energy, light exposure is preferably performed in the presence of both of the organopolysiloxane and a photopolymerization initiator. Also, when only a desired portion is selectively irradiated with active energy rays in a light exposure step, it is possible to polymerize only the exposed portion and dissolve the unexposed portion in a developer and remove it. A polymerization reaction can be further performed by applying external energy such as active energy rays or heat even after the light exposure and development, if necessary.

Specific examples of the polymerizable functional group include a vinyl group, an allyl group, an allyloxy group, a methacryloyl (oxy) group, an acryloyl (oxy) group, a vinyloxy group, a trifluorovinyl group, a trifluorovinyloxy group, an ethynyl group, a 1-oxocyclopenta-2, 5-dien-3-yl group, a cyano group, an alkoxysilyl group, a diarylhydroxymethyl group, a hydroxyfluorenyl group, an oxirane group, and an epoxy group. In terms of achieving high reactivity and a high degree of crosslinking density, a vinyl group, a methacryloyl (oxy) group, an acryloyl (oxy) group, a trifluorovinyloxy group, an ethynyl group, an oxirane group, and an epoxy group are preferable, a methacryloyl (oxy) group or an acryloyl (oxy) group is more preferable, and a methacryloyl (oxy) group is most preferable. Note that the methacryloyl (oxy) group means a methacryloyl group or a methacryloyloxy group. The same applies to an acryloyl (oxy) group.

In both aspects, specifically, $R^6$ may contain a polymerizable alkenyl group as a polymerizable functional group. Examples of the polymerizable alkenyl group include groups having an acryloyl group, a methacryloyl group, a vinyl group, a styryl group, and the like. $R^6$ is preferably an organic group containing, in one molecule, at least one type of functional group selected from the group represented by the following Formulae [i] to [iv].

[Chem. 1]

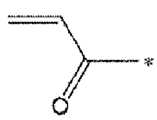
[i]
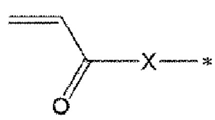
[ii]
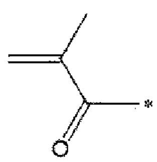
[iii]
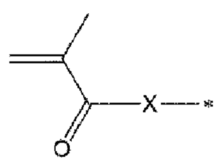
[iv]

(in the formulae above, the sign * represents a bond.)

More preferably, $R^6$ has, in one molecule, at least one type of functional group selected from the group consisting of an acryloyloxypropyl group, an acryloyloxyoctyl group, a methacryloyloxypropyl group, and a methacryloyloxyoctyl group, and among these, $R^6$ particularly preferably has, in one molecule, an acryloyloxypropyl group and/or a methacryloyloxypropyl group.

In Formulae [ii] and [iv], X is a divalent organic group, and may contain a branched structure and/or a cyclic

structure. X may contain any one selected from the group consisting of oxygen, nitrogen, phosphorus, sulfur, and halogen, in addition to carbon and hydrogen. In a case in which a silicon atom and X are bonded to each other, an atom which is an end of X and is directly bonded to a silicon atom is preferably a carbon atom. In a case in which an oxygen atom directly bonded to a silicon atom and X are bonded to each other, an atom which is an end of X and is directly bonded to an oxygen atom is preferably a carbon atom. For example, a divalent hydrocarbon group having 1 to 20 carbon atoms, which may contain a branched structure or a cyclic structure, a polyalkylene glycol, and the like are suitable for use.

In the organopolysiloxane represented by Formula [1], the respective units constituting the M unit, the D unit, and the T unit are not all required to be the same. For example, the unit ($R^1R^2R^3SiO_{1/2}$) having a proportion of M1 may have a different structure, for example, some $R^1$ may be a hydrogen atom and some $R^1$ may be a methyl group. This is also common to other R and X.

$R^1$ to $R^5$ and $R^7$ to $R^{11}$

$R^1$ to $R^5$ and $R^7$ to $R^{11}$ are each independently at least one type of group selected from the group consisting of an organic group and a hydrogen atom.

When $R^1$ to $R^5$ and $R^7$ to $R^{11}$ are organic groups, they are preferably organic groups having 1 to 20 carbon atoms, specifically, linear, branched, or cyclic alkyl groups having 1 to 20 carbon atoms or aromatic ring groups having 6 to 20 carbon atoms, more specifically, alkyl groups such as a methyl group, an ethyl group, a propyl group, an isopropyl group, an n-butyl group, a sec-butyl group, a tert-butyl group, an octyl group, and a cyclohexyl group, and polyether groups such as a polyalkylene glycol group, and particularly preferably a methyl group.

The organopolysiloxane having a polymerizable alkenyl group is also preferably represented by the following Formula [2].

$$(R^1R^2R^3SiO_{1/2})_{M1}(R^4R^5R^6SiO_{1/2})_{M2}$$

$$(R^7R^8SiO_{2/2})_{D1}\ (R^9R^6SiO_{2/2})_{D2}$$

$$(R^{10}SiO_{3/2})_{T1}(R^6SiO_{3/2})_{T2}(SiO_{4/2})_Q$$

$$(O_{1/2}R^{11})_{Y1}(O_{1/2}R^6)_{Y2} \cdots \qquad [2]$$

In General Formula [2], the coefficients M1, M2, D1, D2, T1, T2, and Q represent the proportions (based on an amount by mole) of respective structures when M1 + M2 + D1 + D2 + T1 + T2 + Q = 1. Also, in General Formula [2], the coefficients Y1 and Y2 represent the relative content rate (based on an amount by mole) of ($O_{1/2}R^{11}$) and ($O_{1/2}R^6$), respectively, when M1 + M2 + D1 + D2 + T1 + T2 + Q = 1.

The organopolysiloxane having a polymerizable alkenyl group represented by Formula [2] is an organopolysiloxane in which 0 < Q. That is, the organopolysiloxane is characterized in that it has a Q unit. The presence of the Q unit can improve the heat resistance of a cured product of the organopolysiloxane.

Except for the case where the coefficient Q = 0, the ranges within which the coefficients M1, M2, D1, D2, T1, T2, and Q can stay, are as disclosed in Formula [1] above, including their preferred combinations. The structural unit represented by each coefficient is also as disclosed in Formula [1] above.

The organopolysiloxane having a polymerizable functional group is also preferably represented by the following Formula [3].

$$(R^1R^2R^3SiO_{1/2})_{M1}(R^4R^5R^6SiO_{1/2})_{M2}$$

$$(R^7R^8SiO_{2/2})_{D1}\ (R^9R^6SiO_{2/2})_{D2}$$

$$(R^{10}SiO_{3/2})_{T1}(R^6SiO_{3/2})_{T2}$$

$$(O_{1/2}R^{11})_{Y1}(O_{1/2}R^6)_{Y2} \cdots \qquad [3]$$

In Formula [3], $R^1$ to $R^5$ and $R^7$ to $R^{11}$ are each independently at least one type of group selected from the group consisting of an organic group and a hydrogen atom.

$R^1$ to $R^3$, $R^7$, $R^8$, $R^{10}$ and $R^{11}$ are free of a polymerizable functional group.

$R^6$ is at least one type of organic group containing a polymerizable functional group, and when a plurality of $R^6$ groups are present, they may be the same or different from each other; and

$0 \leq M1$, $0 \leq D1$, $0 \leq T1$, $0 \leq Y1$, $0 \leq Y2$,
$0 < M2 + D2 + T2$,

$$0 < D1 + D2 + T1 + T2,$$

and

$$M1 + M2 + D1 + D2 + T1 + T2 = 1$$

are satisfied.

Formula [3] represents an organopolysiloxane in which the coefficient Q in Formula [1] is 0, that is, an organopolysiloxane free of a Q unit.
$R^1$ to $R^{11}$ in Formula [3] are the same as those in Formula [1], and the preferred groups are also the same.
M1, M2, D1, D2, T1, T2, Y1, and Y2 are also the same as in Formula [1], and the preferred numerical value ranges of the respective coefficients are also the same.

D1 + D2 + T1 + T2

In the organopolysiloxane represented by Formula [3], when $0 < D1 + D2 + T1 + T2$, a constituent unit other than the M unit can be introduced into the organopolysiloxane, which is advantageous in terms of curability and heat resistance after curing of the organopolysiloxane. D1, D2, T1, and T2 preferably satisfy $0.01 < D1 + D2 + T1 + T2$, more preferably $0.1 < D1 + D2 + T1 + T2$, and still more preferably $0.2 < D1 + D2 + T1 + T$. The upper limit is not particularly limited and is 1 or less according to its definition.
From the viewpoint of introducing a flexible moiety into the organopolysiloxane and improving the crack resistance of a cured product thereof, D1 and D2 preferably satisfy $0 < D1 + D2$. D1 and D2 more preferably satisfy $D1 + D2 \geq 0.05$, still more preferably $D1 + D2 \geq 0.1$, and even still more preferably $D1 + D2 > 0.1$. In addition, from the viewpoint of inhibiting heat expansion of a cured product of the organopolysiloxane, D1 and D2 preferably satisfy $D1 + D2 \leq 0.9$ and more preferably $D1 + D2 \leq 0.8$.
Since the D unit structure that is free of a polymerizable alkenyl group and does not serve as a crosslinking point has a higher effect of imparting toughness, D2 may satisfy $D2 = 0$ within the range of the value of D1 + D2. From the same viewpoint, D1 also preferably satisfies $0 < D1$, more preferably $0.1 < D1$, still more preferably $0.20 \leq D1$, even still more preferably $0.25 \leq D1$, and particularly preferably $0.30 \leq D1$. The upper limit of D1 is not particularly limited, but it preferably satisfies $D1 \leq 0.80$, more preferably $D1 \leq 0.75$, and still more preferably $D1 \leq 0.70$.
The values of D1 and D2 that are adjusted to those in the above disclosed ranges result in an optical waveguide to be fabricated from the organopolysiloxane, which minimizes the roughness of the end face when cut and inhibits light scattering to have a tendency to reduce a connection loss.
From the viewpoint of improving the heat resistance of a cured product of the organopolysiloxane, T1 and T2 preferably satisfy $0 < T1 + T2$. T1 and T2 more preferably satisfy $T1 + T2 \geq 0.05$ and still more preferably $T1 + T2 \geq 0.1$. From the viewpoint of inhibiting shrinkage upon curing of a cured product of the organopolysiloxane, T1 and T2 preferably satisfy $T1 + T2 \leq 0.9$ and more preferably $T1 + T2 \leq 0.8$.
In other words, from the viewpoint of achieving crack resistance and heat resistance of a cured product of the organopolysiloxane at the same time, both $0 < D1 + D2$ and $0 < T1 + T2$ are preferably satisfied.
From the above, each proportion in Formula [3] preferably satisfies $0 < M2 + D2 + T2 \leq 0.9$, $0.02 \leq Y1 \leq 0.25$, $Y2 < 0.4$, $0 < M1 \leq 0.6$, $D1 \leq 0.5$, and $T1 \leq 0.5$; more preferably $0.10 \leq M2 + D2 + T2 \leq 0.8$, $0.025 \leq Y1 \leq 0.20$, $Y2 < 0.3$, $0.09 \leq M1 \leq 0.5$, $D1 \leq 0.4$, and $T1 \leq 0.4$; and still more preferably $0.12 \leq M2 + D2 + T2 \leq 0.6$, $0.03 \leq Y1 \leq 0.15$, $Y2 < 0.2$, $0.09 \leq M1 \leq 0.4$, $D1 \leq 0.3$, and $T1 \leq 0.3$.
The core portion and the clad portion of the optical waveguide of the present invention can be produced by curing the composition containing the organopolysiloxane having a polymerizable functional group. Also, in order to inhibit an increase in refractive index of a cured product, an aspect of using an organopolysiloxane free of an aromatic structure as the organopolysiloxane having a polymerizable functional group is also preferable. The content of the aromatic group can be confirmed by $^1H$-NMR and $^{29}Si$-NMR. Being "free of" an aromatic structure means that the object to be measured can be identified as an aromatic group but does not have a clear peak that can be confirmed in an NMR chart.

Method for Producing Organopolysiloxane Having Polymerizable Functional Group

The method for producing the organopolysiloxane having a polymerizable functional group is not particularly

limited as long as each of the organopolysiloxanes represented by Formula [1] above, Formula [2] above, and Formula [3] above can be produced.

For example, the method may include any of a method for singly condensing any one selected from the group consisting of a disiloxane compound, a disilazane compound, hydrolyzate thereof, an alkoxysilane compound, a hydrolyzate thereof, and a partially hydrolyzed condensate or condensing a plurality thereof simultaneously, a method for condensing a chlorosilane compound, a hydrolyzate thereof, and a partially hydrolyzed condensate, a method of ring-opening polymerization of a cyclic siloxane compound, a chain polymerization including an anionic polymerization, and the like, and a plurality of the production methods may be combined for use.

Also, a method for introducing a polymerizable functional group is not particularly limited, and may be any method such as a method for singly condensing any one selected from the group consisting of an alkoxysilane compound, a disiloxane compound, and a disilazane compound, and a hydrolyzate thereof, and a partially hydrolyzed condensate thereof, which have a polymerizable functional group or condensing a plurality thereof simultaneously; a method for converting a reactive organic group introduced into an organopolysiloxane to a polymerizable functional group by a chemical method; and the like, and these methods may be combined for use.

A raw material that can be used in the production of the organopolysiloxane having a polymerizable functional group by hydrolytic condensation will be exemplified below.

M Unit Source

Examples of an M unit source that can be used include trimethylsilanol, trimethylmethoxysilane, hexamethyldisiloxane, hexamethyldisilazane, dimethylsilanol, dimethylmethoxysilane, tetramethyldisiloxane, tetramethyldisilazane, dimethylvinylsilanol, dimethylvinylmethoxysilane, 1,3-divinyltetramethyldisiloxane, 1,3-divinyltetramethyldisilazane, dimethyl(meth)acryloyloxypropylsilanol, dimethyl(meth)acryloyloxypropylmethoxysilane, 1,3-di(meth)acryloyloxypropyltetramethyldisiloxane, dimethylglycidyloxypropylmethoxysilane, 1,3-bis(3-glycidyloxypropyl)tetramethyldisiloxane, 3-(meth)acryloyloxypropyldimethylsilanol, 3-(meth)acryloyloxypropyldimethylmethoxysilane, 1,3-bis((meth)acryloyloxypropyl)-1,1,3,3-tetramethyldisiloxane, tetramethyldisiloxane, methoxytriphenylsilane, triphenylsilanol, 1,3-diphenyltetramethyldisiloxane, 1,3-diphenyltetramethyldisilazane, dimethylphenylsilanol, dimethylmethoxyphenylsilane, 1,4-bis(dimethylmethoxysilyl)benzene, 1,4-bis(dimethylethoxysilyl)benzene, 2-(3,4-epoxycyclohexyl)ethyldimethylmethoxysilane, 2-(3,4-epoxycyclohexyl)ethyldimethylethoxysilane, 3-glycidoxypropyldimethylmethoxysilane, 3-glycidoxypropyldimethylethoxysilane, and compounds in which a halogen is bonded instead of a silanolic hydroxy group or an alkoxy group in the compound containing a silanolic hydroxy group or an alkoxy group among the compounds listed above. For the M unit source, hexamethyldisiloxane is particularly suitable for use.

D Unit Source

Examples of a D unit source that can be used include dimethyldisilanol, dimethyldimethoxysilane, diphenyldisilanol, diphenyldimethoxysilane, tetramethyldisiloxane, 3-(meth)acryloyloxypropyldimethoxymethylsilane, methyldimethoxyphenylsilane, diethoxymethylphenylsilane, methylphenyldisilanol, 1,4-bis(methyldimethoxysilyl)benzene, 1,4-bis(methyldiethoxysilyl)benzene, dimethoxy(methyl)(3,3,3-trifluoropropyl)silane, 2-(3,4-epoxycyclohexyl)ethylmethyldimethoxysilane, 2-(3,4-epoxycyclohexyl)ethylmethyldiethoxysilane, 3-glycidoxypropylmethyldimethoxysilane, 3-glycidoxypropylmethyldiethoxysilane, compounds in which a halogen is bonded instead of a silanolic hydroxy group or alkoxy group in the compounds listed above, and polymers thereof, and dimethyldimethoxysilane is particularly suitable for use.

T Unit Source

Examples of a T unit source include trimethoxysilane, trimethoxysilanes in which $C_1$ to $C_{20}$ long-chain alkoxy groups have been modified, such as methyltrimethoxysilane, ethyltrimethoxysilane, propyltrimethoxysilane, hexyltrimethoxysilane, and decyltrimethoxysilane, vinyltrimethoxysilane, phenyltrimethoxysilane, 3,3,3-trifluoropropyltrimethoxysilane, 3-(meth)acryloyloxypropyltrimethoxysilane, 8-(meth)acryloyloxyoctyltrimethoxysilane, 1,4-bis (trimethoxysilyl) benzene, p-styryltrimethoxysilane, 3-glycidyloxypropyltrimethoxysilane, 8-glycidyloxyoctyltrimethoxysilane, 2-(3,4-epoxycyclohexyl)ethyltrimethoxysilane, 2-(3,4-epoxycyclohexyl)ethyltriethoxysilane, 3-glycidoxypropyltriethoxysilane, and 3-glycidoxypropyltrimethoxysilane. In addition to these methoxysilane compounds, alkoxysilane compounds such as ethoxysilane, silanol compounds, chlorosilane compounds, hydrosilylsilane compounds, and polymers thereof can be used. In particular, 3-methacryloyloxypropyltrimethoxysilane, 8-methacryloyloxyoctyltrimethoxysilane, 3-acryloyloxypropyltrimethoxysilane, 8-acryloyloxyoctyltrimethoxysilane, and decyltrimethoxysilane can be suitably used.

Q Unit Source

Examples of a Q unit source that can be used include alkoxysilanes such as tetrachlorosilane, tetramethoxysilane, tetraethoxysilane, tetraisopropoxysilane, tetrapropoxysilane, tetrabutoxysilane, tetrapentyloxysilane, tetraphenyloxysilane, trimethoxymonoethoxysilane, dimethoxydiethoxysilane, triethoxymonomethoxysilane, trimethoxymonopropoxysilane, monomethoxytributoxysilane, monomethoxytripentyloxysilane, monomethoxytriphenyloxysilane, dimethoxydipropoxysilane, tripropoxymonomethoxysilane, trimethoxymonobutoxysilane,

dimethoxydibutoxysilane,
triethoxymonopropoxysilane,
diethoxydipropoxysilane, tributoxymonopropoxysilane, dimethoxymonoethoxymonobutoxysilane, diethoxymonomethoxymonobutoxysilane, diethoxymonopropoxymonobutoxysilane, dipropoxymonomethoxymonoethoxysilane, dipropoxymonomethoxymonobutoxysilane, dipropoxymonoethoxymonobutoxysilane, dibutoxymonomethoxymonoethoxysilane, dibutoxymonoethoxymonopropoxysilane, and monomethoxymonoethoxymonopropoxymonobutoxysilane, or aryloxysilanes and tetramethoxysilane oligomers, such as methyl silicates MS51, MS56, MS57, and MS60 manufactured by Mitsubishi Chemical Corporation, tetraethoxysilane oligomers such as ethyl silicate oligomers ES40 and ES48 manufactured by Tama Chemicals Co., Ltd, and methyl silicate MS 51 is particularly suitable for use.

The sources of the M, D, T and Q units disclosed above may be used in combination of one or more types thereof.
A catalyst for hydrolysis condensation of these silicon raw materials, such as an acid catalyst, a base catalyst, or an inorganic salt can be used, and in particular, an acid catalyst can be suitably used.
Examples of the acid catalyst that can be used include hydrochloric acid, sulfuric acid, trifluoroacetic acid, acetic acid, methacrylic acid, and acrylic acid, and particularly, hydrochloric acid can be suitably used.
Examples of the base catalyst that can be used include ammonia, hexamethyldisilazane, triethylamine, tetraethylammonium hydroxide, diazabicycloundecene, potassium hydroxide, sodium hydroxide, barium hydroxide, potassium carbonate, and sodium carbonate, and potassium hydroxide is particularly suitable for use.
Examples of the inorganic salt that can be used include sodium chloride, potassium chloride, magnesium chloride, calcium chloride, sodium bromide, potassium bromide, magnesium bromide, and calcium bromide, and sodium chloride is particularly suitable for use.
Examples of the solvent to be used upon hydrolysis condensation reaction include tetrahydrofuran, toluene, methanol, ethanol, isopropanol, hexane, and heptane, and tetrahydrofuran is particularly preferable, and two or more types of solvents may be used depending on the solubility of a product, and a mixed liquid of toluene and methanol or a mixed liquid of tetrahydrofuran and methanol is particularly preferable.
The alkoxy group or silanol group remaining without being hydrolyzed and condensed may be substituted with an organic acid or an alcohol, if necessary. Examples of the organic acid that can be used include acetic acid, acrylic acid, and methacrylic acid, and examples of the alcohol that can be used include, as alcohols free of a polymerizable alkenyl group, methanol, ethanol, propanol, butyl alcohol, pentanol, hexanol, heptanol, and structural isomers thereof, and as alcohols containing a polymerizable alkenyl group, 2-hydroxyethyl acrylate and 2-hydroxyethyl methacrylate, and from the viewpoint of their stability, 2-hydroxyethyl acrylate and 2-hydroxyethyl methacrylate are preferable.
When the organopolysiloxane has a rigid structure such as a complete cage silsesquioxane, its cured product is hard and brittle, so that it is preferably an organopolysiloxane without a complete cage structure. The organopolysiloxane may be any organopolysiloxane as long as it is not a complete cage silsesquioxane, and may include, for example, a random structure or a ladder structure as a higher-order structure within a range not impairing the effects of the present invention.

Water

The amount of water to be used for hydrolysis is preferably 0.5 equivalent or more, more preferably 0.8 equivalent or more, and still more preferably 1.1 equivalent or more, based on the total amount of alkoxy group contained in the MDTQ unit source. The water is not particularly limited, and may be water contained in commercially available hydrochloric acid or the like, or water purified by distillation or by an ion exchange resin may be used.
As disclosed above, in both aspects, at least one of the core portion or the clad portion is required to be made of a cured product produced by curing the organopolysiloxane-containing composition represented by Formula [1] above, but the core portion or the clad portion may be made of other materials as long as the effects of the present invention are not impaired.
For example, organic-inorganic hybrid materials such as an organopolysiloxane having a polymerizable functional group, and various resin materials can be used. Examples of the resin materials include an acrylic-based

resin, a methacrylic-based resin such as polymethyl methacrylate (PMMA), an epoxy-based resin, an oxetane-based resin, a phenoxy resin, a benzocyclobutene-based resin, a norbornene-based resin, a fluorine-based resin, a silicone-based resin, a phenolic-based resin, a polyester-based resin, a polycarbonate-based resin, a polystyrene-based resin, a polyimide-based resin, such as a polyimide resin, a poly(imide/isoindoloquinazolinedioneimide) resin, a polyetherimide resin, a polyetherketone resin, and a polyesterimide resin, a polybenzoxazole-based resin, and polysilane. Among these materials, a material having a high degree of transparency in a near-infrared wavelength band and a high degree of heat resistance can be suitably used as a material of the core portion and the clad portion.

However, in both aspects, it is preferable that both of the core portion and the clad portion be made of a cured product produced by curing the organopolysiloxane-containing composition represented by Formula [1].

Organopolysiloxane-Containing Composition Containing Organopolysiloxane Having Polymerizable Functional Group

The organopolysiloxane-containing composition containing an organopolysiloxane having a polymerizable functional group (hereinafter may be simply referred to as "organopolysiloxane-containing composition") in the present invention is used for forming the optical waveguide. As disclosed above, the composition is preferably the organopolysiloxane-containing composition containing an organopolysiloxane having a polymerizable functional group, and more preferably the organopolysiloxane-containing composition containing an organopolysiloxane having a polymerizable alkenyl group. The composition may contain, in addition to the organopolysiloxane disclosed above, a monofunctional polymerizable alkenyl compound, a polyfunctional polymerizable alkenyl compound, and/or an alkenyl-based polymer, and the like, within a range that does not impair the properties of a cured product to be produced from the composition, which will be described below.

Furthermore, a polymerization initiator may be contained in order to polymerize and cure the organopolysiloxane and the polymerizable alkenyl compound. The organopolysiloxane or the organopolysiloxane-containing composition can be cured by electron beam irradiation or the like without using a polymerization initiator, but a large amount of energy is required for curing, and therefore, a composition containing, in addition to the organopolysiloxane disclosed above, at least a polymerization initiator, is a preferred aspect of the organopolysiloxane-containing composition in the present invention.

Also, other components, such as a sensitizer, a chain transfer agent, an antioxidant, an ultraviolet-ray absorber, a light stabilizer, a leveling agent, a rheology modifier, an adhesion aid such as a silane coupling agent, a dye, an antifoaming agent, other components, a solvent, and the like, can be contained within a range not impairing the properties of a cured product to be produced from the composition, which will be described below.

A component that may be contained in the organopolysiloxane-containing composition will be described below.

Monofunctional Polymerizable Alkenyl Compound

Specific examples of the monofunctional polymerizable alkenyl compound include (meth)acrylates containing a carboxy group, such as (meth) acrylic acid, mono-2-(meth)acryloyloxyethyl succinate, mono-2-(meth)acryloyloxyethyl maleate, mono-2-(meth)acryloyloxyethyl phthalate, and 2-(meth)acryloyloxyethyl hexahydro-phthalate mono;

(meth)acrylates having a hydroxy group such as 2-hydroxyethyl (meth)acrylate, 2-hydroxypropyl (meth)acrylate, 2-hydroxybutyl (meth)acrylate, 4-hydroxybutyl (meth)acrylate, and 6-hydroxyhexyl (meth)acrylate;

alkyl (meth) acrylates such as methyl (meth) acrylate, ethyl (meth) acrylate, propyl (meth) acrylate, n-butyl (meth) acrylate, i-butyl (meth) acrylate, tert-butyl (meth) acrylate, pentyl (meth) acrylate, heptyl (meth) acrylate, 2-ethylhexyl (meth) acrylate, n-octyl (meth) acrylate, isooctyl (meth) acrylate, n-nonyl (meth) acrylate, isononyl (meth) acrylate, decyl (meth) acrylate, lauryl (meth) acrylate, tridecyl (meth) acrylate, and stearyl (meth) acrylate;

(meth) acrylates containing an alicyclic structure such as cyclohexyl (meth) acrylate, dicyclopentenyl (meth) acrylate, 2-dicyclopentenoxyethyl (meth) acrylate, isobornyl (meth) acrylate, dicyclopentanyl (meth) acrylate, adamantyl (meth) acrylate, and 4-tert-butylcyclohexyl (meth) acrylate;

(meth) acrylates containing an aromatic ring structure such as phenyl (meth) acrylate, benzyl (meth) acrylate, phenoxyethyl (meth) acrylate, phenoxydiethylene glycol (meth) acrylate, phenoxypolyethylene glycol (meth) acrylate, nonylphenoxypolyethylene glycol (meth) acrylate, phenoxypolypropylene glycol (meth) acrylate, phenylphenyl (meth) acrylate, phenylphenoxyethyl (meth) acrylate, phenoxybenzyl (meth) acrylate, phenylbenzyl (meth) acrylate, naphthyl (meth) acrylate, and (1-naphthyl) methyl (meth) acrylate;

(meth) acrylates containing a heterocyclic structure such as tetrahydrofurfuryl (meth) acrylate, glycidyl (meth) acrylate, and (meth) acryloyl morpholine;

alkoxy (meth) acrylates such as methoxyethyl (meth) acrylate, ethoxyethyl (meth) acrylate, and butoxyethyl (meth) acrylate;

3-(meth) acryloxypropyltrimethoxysilane, 3-(meth) acryloxypropyltriethoxysilane, 2-(meth) acryloyloxyethyl acid

phosphate, trifluoroethyl (meth) acrylate, heptadecafluorodecyl (meth) acrylate, and 2-(meth) acryloyloxyethyl isocyanate;

styrene derivatives such as styrene, α-methylstyrene, 2-vinylpyridine, 4-vinylpyridine, 1,1-diphenylethylene, and aromatic ring hydrogen substitution products thereof; and

vinyl compounds such as vinyl acetate, vinyl octanoate, vinyl decanoate, vinyl hexanoate, acrylonitrile, and vinyl benzoate.

Incidentally, it is preferable to use a compound free of an aromatic structure so as not to increase the refractive index of a cured product.

Polyfunctional Polymerizable Alkenyl Compound

Specific examples of the polyfunctional polymerizable alkenyl compound include alkylene glycol di(meth) acrylates such as ethylene glycol di(meth)acrylate, propylene glycol di(meth)acrylate, butylene glycol di(meth)acrylate, 1,6-hexanediol di(meth)acrylate, 1,9-nonanediol di(meth)acrylate, 1,10-decanediol di(meth)acrylate, and neopentyl glycol di(meth)acrylate;

polyalkylene glycol di(meth)acrylates such as polyethylene glycol di(meth)acrylate, polypropylene glycol di(meth) acrylate, and polybutylene glycol di(meth)acrylate;

di(meth)acrylates having an alicyclic structure such as cyclohexanedimethanol di(meth)acrylate, tricyclodecane dimethanol di(meth)acrylate, ethoxylated hydrogenated bisphenol A di(meth)acrylate, propoxylated hydrogenated bisphenol A di(meth)acrylate, and adamantanediol di(meth)acrylate;

bifunctional (meth)acrylates such as polycarbonatediol di(meth)acrylate, polyesterdiol di(meth)acrylate, ethoxylated bisphenol A di(meth)acrylate, propoxylated bisphenol A di(meth)acrylate, 9,9-bis(4-acryloyloxyethoxyphenyl) fluorene, and polyurethane di(meth)acrylate;

trifunctional (meth)acrylates such as trimethylolpropane tri(meth)acrylate, ethoxylated isocyanuric acid tri(meth) acrylate, and ε-caprolactone-modified tris((meth)acloxyethyl)isocyanurate;

tetrafunctional (meth)acrylate such as ditrimethylolpropane tetra(meth)acrylate;

pentafunctional (meth)acrylates such as dipentaerythritol penta(meth)acrylate;

polyfunctional monomers such as hexafunctional (meth)acrylates such as dipentaerythritol hexa(meth)acrylate; 1,4-divinylbenzene and 1,3-divinylbenzene.

Incidentally, it is preferable to use a compound free of an aromatic structure so as not to increase the refractive index of a cured product.

Alkenyl-Based Polymer

The alkenyl-based polymer is a polymer containing 50 mass% or more of an alkenyl monomer unit in the composition. In the present description, the term "unit" means a repeating unit constituting a polymer. The alkenyl-based polymer may be monofunctional or polyfunctional. Also, it is preferable to use a compound free of an aromatic structure so as not to either increase a refractive index of the cured product or make the cured product brittle.

The alkenyl monomer unit contained in the alkenyl-based polymer may be one or two or more types thereof.

A polymerization method for producing the alkenyl-based polymer is not particularly limited, and for example, polymerization can be performed by a publicly known method such as a solution polymerization method, a suspension polymerization method, an emulsion polymerization method, or a partial polymerization method. In the present invention, the suspension polymerization method is preferred in terms of making control of a polymerization reaction and separation of a polymer produced relatively easy.

An alkenyl-based polymer in which a functional group containing a double bond such as a (meth)acryloyl group or a vinyl group has been introduced into a side chain by chemical modification to modify the polymer may be used as the alkenyl-based polymer. For example, a reaction between a carboxy group and a glycidyl group or a reaction between a hydroxy group and an isocyanate group can be used as the chemical modification method.

In case of using a reaction between a carboxy group and a glycidyl group as the chemical modification method, an example thereof is a method in which an alkenyl-based polymer containing an alkenyl monomer unit having a carboxy group is produced and the resulting alkenyl-based polymer is reacted with, for example, a compound having a glycidyl group and a double bond, such as glycidyl (meth)acrylate.

In the reaction of the alkenyl-based polymer containing an alkenyl-based monomer unit having a carboxy group with the compound having a glycidyl group and a double bond, it is preferable to use a reaction catalyst in order to shorten reaction time. Examples of the reaction catalyst include quaternary ammonium salts such as tetrabutylammonium

bromide, a quaternary phosphonium salt such as ethyltriphenylphosphonium bromide, and phosphine-based compounds such as triphenylphosphine. In terms of the organopolysiloxane-containing composition of the present embodiment which is less likely to be colored, a quaternary ammonium salt is particularly preferred.

The weight-average molecular weight (Mw) of the alkenyl-based polymer is preferably 5000 to 500000 and more preferably 10000 to 200000. The weight-average molecular weight of 5000 or more results in a cured product having favorable strength. The alkenyl-based polymer having a molecular weight of 500000 or less reduces the viscosity of the organopolysiloxane-containing composition of the present embodiment, rendering favorable workability.

Polymerization Initiator

Examples of the polymerization initiator include a photopolymerization initiator, a thermal polymerization initiator, and a peroxide to be used for redox polymerization. The type of the polymerization initiator can be appropriately selected depending on the polymerization method.

Photopolymerization Initiator

The photopolymerization initiator is a radical polymerization initiator to be used for photopolymerization. Specific examples of the photopolymerization initiator include benzophenone-type compounds such as benzophenon, 4-methylbenzophenon, 2,4,6-trimethylbenzophenon, methyl 2-benzoylbenzoate, and 4-phenylbenzophenon; anthraquinone-type compounds such as tert-butylanthraquinone and 2-ethylanthraquinone; alkylphenone-type compounds such as 2-hydroxy-2-methyl-1-phenylpropane-1-one, oligo {2-hydroxy-2-methyl-1-[4-(1-methylvinyl) phenyl] propanone}, benzyldimethylketal, 1-hydroxycyclohexylphenylketone, benzoin methyl ether, 2-methyl-[4-(methylthio) phenyl]-2-morpholino-1-propanone, and 2-hydroxy-1-{4-[4-(2-hydroxy-2-methylpropionyl) benzyl] phenyl}-2-methylpropane-1-one; thioxanthone-type compounds such as 2-benzyl-2-dimethylamino-4'-morpholinobutyrophenone, diethylthioxanthone, and isopropylthioxanthone; acylphosphineoxide-type compounds such as 2,4,6-trimethylbenzoyldiphenylphosphineoxide, bis(2,6-dimethoxybenzoyl)-2,4,4-trimethylpentylphosphineoxide, and bis(2,4,6-trimethylbenzoyl)-phenylphosphineoxide; phenylglyoxlate-type compounds such as phenylglyoxilic acid methyl ester; oxime ester type compounds such as N-acetoxy-N-{4-acetoxyimino-4-[9-ethyl-6-(o-toluoyl)-9H-carbazol-3-yl] butan-2-yl} acetamide, N-acetoxy-N-{3-(acetoxyimino)-3-[9-ethyl-6-(1-naphthoyl)-9H-carbazol-3-yl]-1-methylpropyl} acetamide, methyl 4-acetoxyimino-5-[9-ethyl-6-(2-methylbenzoyl)-9H-carbazol-3-yl]-5-oxopentanoate, and methyl 4-acetoxyimino-5-oxo-5-(4-(phenylthio) phenyl) pentanoate, and combinations thereof.

Among these, in terms of inhibiting coloration of a cured product, the alkylphenone-type compounds are preferred, and 2-hydroxy-2-methyl-1-phenylpropane-1-one and 1-hydroxycyclohexyl phenyl ketone are more preferred. Also, in terms of increasing the likelihood of making the inside of a cured product sufficiently cured, the acylphosphineoxide-type compounds are preferable and in terms of inhibiting coloration of a cured product, 2,4,6-trimethylbenzoyldiphenylphosphineoxide and methyl 4-acetoxyimino-5-oxo-5-(4-(phenylthio) phenyl) pentanoate are more preferable. Bis(2,4,6-trimethylbenzoyl)phenylphosphine oxide, which has high sensitivity to light on the longer wavelength side, is more preferable. From the viewpoint of high reactivity to light in the vicinity of the 365 nm wavelength, 2-benzyl-2-dimethylamino-4'-morpholinobutyrophenone is also preferable. For these photopolymerization initiators, a single type may be used alone or two or more types may be used in combination.

When the organopolysiloxane-containing composition of the present invention is cured by photopolymerization to produce a cured product, a wavelength of light which the organopolysiloxane-containing composition is irradiated with is not particularly limited, but it is preferable to irradiate the organopolysiloxane-containing composition with ultraviolet rays having a wavelength of 200 to 500 nm. Specific examples of a light source of ultraviolet rays include an ultra-high pressure mercury lamp, a high pressure mercury lamp, a metal halide lamp, a high power metal halide lamp, a UV-LED lamp, a chemical lamp, and a black light.

Following a photopolymerization reaction of the organopolysiloxane-containing composition, after-cure may be further performed. The after-cure can reduce the amount of unreacted polymerizable alkenyl group remaining in a cured product, allowing further enhancement of the strength of the cured product. Examples of the conditions of the after-cure include a temperature of 50°C to 200°C for several tens of seconds to 60 minutes, or a temperature of 80°C to 150°C for several tens of seconds to 60 minutes.

Thermal Polymerization Initiator

The thermal polymerization initiator is a radical polymerization initiator to be used for thermal polymerization. Examples of the thermal polymerization initiator include an organic peroxide and an azo compound.

Specific examples of the organic peroxide include ketone peroxides such as a methyl ethyl ketone peroxide; peroxyketals such as 1,1-di(tert-hexylperoxy)-3,3,5-trimethylcyclohexane, 1,1-di(tert-hexylperoxy)cyclohexane, and 1,1-di(tert-butylperoxy)cyclohexane; hydroperoxides such as 1,1,3,3-tetramethylbutyl hydroperoxide, cumene hydroperoxide, and p-menthane hydroperoxide; dialkyl peroxides such as dicumyl peroxide and di-tert-butyl peroxide; diacyl peroxides such as dilauroyl peroxide and dibenzoyl peroxide; peroxydicarbonates such as di(4-tert-butylcyclohexyl) peroxydicarbonate and di(2-ethylhexyl)peroxydicarbonate; and peroxyesters such as tert-butylperoxy-2-ethylhexanoate, tert-hexylperoxyisopropyl monocarbonate, tert-butylperoxybenzoate, and 1,1,3,3-tetramethylbutyl peroxy-2-ethylhexanoate.

Specific examples of the azo compound include 2,2'-azobisisobutyronitrile, 2,2'-azobis(2-methylbutyronitrile), 2,2'-azobis(2,4-dimethylvaleronitrile), 1,1'-azobis-1-cyclohexanecarbonitrile, dimethyl-2,2'-azobisisobutyrate, 4,4'-azobis-4-cyanovaleric acid, and 2,2'-azobis-(2-amidinopropane)dihydrochloride.

For these thermal polymerization initiators, a single type may be used alone or two or more types may be used in combination. The thermal polymerization initiator that is an organic peroxide is preferable in terms of making it less likely for a cured product to generate bubbles. In consideration of the balance between a curing time and a pot life of the organopolysiloxane-containing composition, a 10-hour half-life temperature of the organic peroxide is preferably 35 to 80°C, more preferably from 40 to 75°C, and still more preferably from 45 to 70°C. The 10-hour half-life temperature of 35°C or higher makes it less likely for the organopolysiloxane-containing composition to gel at normal temperature, resulting in a composition having a favorable pot life. The 10-hour half-life temperature of 80°C or lower allows a curing time of the organopolysiloxane-containing composition to be shortened.

Examples of such an organic peroxide include 1, 1, 3, 3-tetramethylbutylperoxy-2-ethylhexanoate, tert-butylperoxy-2-ethylhexanoate, and di(4-tert-butylcyclohexyl)peroxydicarbonate. An example of a commercially available product of 1, 1, 3, 3-tetramethylbutyl peroxy-2-ethylhexanoate includes PEROCTA O (product name, manufactured by NOF Corporation, 10-hour half-life temperature: 65.3°C). An example of a commercially available product of tert-butyl peroxy-2-ethylhexanoate is PERBUTYL O (product name, manufactured by NOF Corporation, 10-hour half-life temperature: 72.1°C). An example of a commercially available product of di (4-tert-butylcyclohexyl) peroxydicarbonate is PERROYL TCP (product name, manufactured by NOF Corporation, 10-hour half-life temperature: 40.8°C).

When the organopolysiloxane-containing composition is cured by thermal polymerization to produce a cured product, curing conditions are not particularly limited, but from the viewpoint of easily producing a resin for optical members in a manner that the resin has inhibited coloration, the curing temperature is preferably 40 to 200°C and more preferably 60 to 150°C. A curing time (heating time) varies depending on the curing temperature, but is preferably 1 to 120 minutes and more preferably 1 to 60 minutes.

Following a thermal polymerization of the organopolysiloxane-containing composition, it is preferable to further perform after-cure. Examples of the conditions of the after-cure include a temperature of 50°C to 200°C for several tens of seconds to 60 minutes, or a temperature of 80°C to 150°C for several tens of seconds to 60 minutes.

Redox Polymerization

In the redox polymerization, a redox-based polymerization initiator is usually used. The redox-based polymerization initiator is a polymerization initiator using a peroxide and a reducing agent in combination. Examples of the peroxide to be used in the redox polymerization include dibenzoyl peroxide and hydroperoxide. For these peroxides, a single type may be used alone or two or more types may be used in combination. When the aforementioned peroxide is used as a redox-based polymerization initiator, Examples of a combination with a reducing agent include as follows.

(1) A combination of dibenzoyl peroxide (peroxide) and an aromatic tertiary amine (reducing agent) such as N, N-dimethylaniline, N, N-dimethyl-p-toluidine, or N, N-bis (2-hydroxypropyl)-p-toluidine.
(2) A combination of a hydroperoxide (peroxide) and metal soap (reducing agent).
(3) A combination of a hydroperoxide (peroxide) and a thiourea (reducing agent).

In a case in which the organopolysiloxane-containing composition is cured by redox polymerization to produce a cured product, the composition can be cured at a normal temperature of 5 to 40°C by using a redox-based polymerization initiator. In terms of being capable of reducing the amount of unreacted (meth) acryloyl group remaining in the resulting cured product and further enhancing the strength of a cured product, the curing temperature is preferably 15 to 40°C.

In terms of making the organopolysiloxane-containing composition less likely to gel and enabling stable handling, in a preferable method for curing, a reducing agent is preliminarily dissolved in the organopolysiloxane-containing composition and the peroxide is added thereto.

In curing the organopolysiloxane-containing composition, it is preferable to cure the organopolysiloxane-containing composition in a sealed state in order to inhibit curing inhibition by oxygen. An example of the sealing method is a method for interposing the organopolysiloxane-containing composition between glass or PET films.

Chain Transfer Agent

In case of carrying out a curing reaction of the organopolysiloxane-containing composition in air, active radicals are trapped as peroxide radicals by oxygen to inhibit the polymerization, but the addition of a chain transfer agent that provides hydrogen enables inhibition of polymerization inhibition by oxygen.

Examples of the chain transfer agent include thiol compounds, for example, mercaptocarboxylic acid esters such as methyl mercaptoacetate, methyl 3-mercaptopropionate, 2-ethylhexyl 3-mercaptopropionate, 3-methoxybutyl 3-mercaptopropionate, n-octyl 3-mercaptopropionate, stearyl 3-mercaptopropionate, 1,4-bis(3-mercaptopropionyloxy) butane, 1,4-bis(3-mercaptobutyryloxy) butane, trimethylolethane tris(3-mercaptopropionate), trimethylolethane tris(3-mercaptobutyrate), trimethylolpropane tris(3-mercaptopropionate), trimethylolpropane tris(3-mercaptobutyrate), pentaerythritol tetrakis(3-mercaptopropionate), pentaerythritol tetrakis(3-mercaptobutyrate), dipentaerythritol hexakis(3-mercaptopropionate), dipentaerythritol hexakis(3-mercaptobutyrate), tris[2-(3-mercaptopropionyloxy) ethyl]isocyanurate, and tris[2-(3-mercaptobutyryloxy) ethyl]isocyanurate; alkylthiols such as ethanethiol, 2-methylpropane-2-thiol, n-dodecanethiol, 2,3,3,4,4,5-hexamethylhexane-2-thiol(tert-dodecanethiol), ethane-1,2-dithiol, propane-1,3-dithiol, and benzylthiol;

aromatic thiols such as benzenethiol, 3-methylbenzenethiol, 4-methylbenzenethiol, naphthalene-2-thiol, pyridine-2-thiol, benzimidazole-2-thiol, and benzothiazole-2-thiol; mercaptoalcohols such as 2-mercaptoethanol and 4-mercapto-1-butanol; and silane-containing thiols such as 3-(trimethoxysilyl) propane-1-thiol and 3-(triethoxysilyl) propane-1-thiol. Among these, from the viewpoint of the reactivity and storage stability of the curable composition, a secondary thiol compound is preferably used.

In case of adding the chain transfer agent, for the chain transfer agent, a single type may be used alone or two or more types may be used in combination. Also, the amount thereof added is preferably 0.01 to 20 parts by mass, more preferably 0.1 to 10 parts by mass, and still more preferably 0.5 to 10 parts by mass, based on 100 parts by mass of the total amount of the polymerizable components. In case of using a mixture of two or more types thereof, the total amount of chain transfer agents falls within the above disclosed range.

Solvent

A solvent may be contained for the purpose of diluting the organopolysiloxane-containing composition.

The type of the solvent is not particularly limited as long as the physical properties required for a cured product of the organopolysiloxane-containing composition are not impaired, and the following compounds may be used, such as aromatic hydrocarbons having favorable solubility (e.g., toluene, xylene, ethyl benzoate, ethylbenzene, and benzyl alcohol), ketones (e.g., acetone, methyl ethyl ketone, methyl isobutyl ketone, diisobutyl ketone, cyclohexanone, and diacetone alcohol), esters (e.g., methyl acetate, ethyl acetate, butyl acetate, sec-butyl acetate, methoxybutyl acetate, amyl acetate, n-propyl acetate, ethyl lactate, methyl lactate, butyl lactate, propylene glycol monomethyl ether acetate, and γ-butyrolactone), ethers (e.g., isopropyl ether, ethylene glycol monomethyl ether, propylene glycol monomethyl ether, ethylene glycol monobutyl ether, 1, 4-dioxane, methyl tert-butyl ether, and tetrahydrofuran), alcohols (e.g., methanol, ethanol, n-propanol, isopropanol, butanol, sec-butanol, tert-butanol, and n-pentanol), halogen-based solvents (e.g., methylene chloride, trichloroethylene, tetrachloroethylene, bromopropane, and chloroform), others (e.g., dimethylsulfoxide, N, N-dimethylformamide, and water), and the like, and two or more of the solvents may be used.

The content of the solvent in the organopolysiloxane-containing composition is not particularly limited as long as the physical properties required for a cured product of the organopolysiloxane-containing composition are not impaired, but in a case in which a viscosity is desired to be reduced while inhibiting a volatile content to a small amount, the content is preferably more than 0 mass% and 25 mass% or less based on the entire organopolysiloxane-containing composition. Also, in case of producing the cured product of a thin film, the content is preferably 75 mass% or more and less than 100 mass% based on the whole composition.

Antioxidant

The organopolysiloxane-containing composition preferably further contains an antioxidant. When the organopolysiloxane-containing composition contains an antioxidant, its coloration due to heat, such as heating upon soldering of a cured product or heat generation of a device, can be inhibited.

Specific examples of the antioxidant include phenolic antioxidants, such as 2,6-di-tertbutylphenol, 2,6-di-tert-butyl-p-cresol, n-octadecyl-3-(3',5'-di-tert-butyl-4'-hydroxyphenyl)propionate, tetrakis-[methylene-3-(3',5'-di-tert-butyl-4'-hydroxyphenyl)propionate] methane, triethylene glycol bis[3-(3-tert-butyl-5-methyl-4-hydroxyphenyl)propionate], and 1,6-hexanediol bis[3-(3,5-di-tert-butyl-4-hydroxyphenyl)propionate]; phosphorus-based antioxidants, such as triphenyl phosphite, trisisodecyl phosphite, tristridecyl phosphite, tris(2,4-di-tert-butylphenyl)phosphite and tetra(C12 to C15 alkyl)-4,4'-isopropylidene diphenyl diphosphite; and sulfur-based antioxidants such as dilauryl-3,3'-thiodipropionate,

ditridecyl-3,3'-thiodipropionate, dimyristyl-3,3'-thiodipropionate, disteryl-3,3'-thiodipropionate, and pentaerythritol tetrakis(β-laurylthiopropionate). For these antioxidants, a single type may be used alone or two or more types may be used in combination.

Other Components

The organopolysiloxane-containing composition in the present invention may contain other components such as a filler, a curing control agent, and a viscosity modifier. These components can be appropriately contained within a range that does not affect the transmission loss, heat resistance, and refractive index of a cured product.

Curing of Organopolysiloxane-Containing Composition

For a cured product produced by curing the organopolysiloxane-containing composition disclosed above with heat or light, the curing conditions of the organopolysiloxane-containing composition are not particularly limited, and the composition can be cured under conditions appropriately adopted for curing of a silicone resin depending on the type of a polymerization initiator and the like.

Property of Cured Product

When the organopolysiloxane-containing composition of the present invention is cured as described above, a cured product having the following properties can be produced.

Refractive Index

The refractive index of the cured product can be controlled by changing the proportion of a constituent unit of the organopolysiloxane. For example, a large value of M2 + D2 + T2 in Formula [1], [2] or [3] above, that is, a high content of a polymerizable functional group increases the density of a cured product to be produced, allowing its refractive index to be increased. On the contrary, a small value of M2 + D2 + T2, that is, a low content of a polymerizable functional group reduces the density of the cured product to be produced, allowing a reduced refractive index. In addition, the refractive index of the cured product can be controlled by changing the component ratio of the organopolysiloxane-containing composition.

Method for Producing Optical Waveguide

A method for producing the optical waveguide of the present invention is not particularly limited, and a publicly known method can be employed. Specifically, a photolithography method, a replication (stamper) method, a direct light exposure method, a reactive ion etching (RIE) method, a method based on injection molding, a photobleaching method, a direct drawing method, a self-forming method, and the like can be used. Alternatively, the optical waveguide can be fabricated by a method such as nanoimprinting.

An example of the method for producing the optical waveguide will be described below with reference to FIG. 1. First, an organopolysiloxane-containing composition for forming an underclad portion 32 is applied onto a substrate. Subsequently, the organopolysiloxane-containing composition is cured by external energy to form the underclad portion 32.

Next, an organopolysiloxane-containing composition for forming a core portion 20 is applied onto the underclad portion 32. Subsequently, the organopolysiloxane-containing composition is patterned by a photolithography process to form the core portion 20 on the underclad portion 32. At this time, in a case where the core portion 20 is formed in a shape in which the width of the core portion 20 varies along the light propagation direction, the organopolysiloxane-containing composition is exposed to light using a photomask having a shape in which the width of the core portion 20 varies along the light propagation direction and then developed to enable the formation of the core portion 20. Also, after the core portion 20 is formed, it may be post-baked, if necessary. An atmosphere upon light exposure may be in air or in an inert atmosphere. Light exposure in an inert atmosphere can reduce an uncured layer formed on a surface of a polymer layer. As disclosed above, post-bake may be performed, if necessary. The post-bake may promote curing and may improve the adhesiveness between the polymer layer and a substrate and the adhesiveness between the polymer layers. Examples of the conditions of the post-bake include conditions such as a temperature of 50°C to 200°C for several tens of seconds to 60 minutes, or a temperature of 80°C to 150°C for several tens of seconds to 60 minutes.

Next, an organopolysiloxane-containing composition for forming an overclad portion 31 is applied onto the underclad portion 32 and the core portion 20. Subsequently, the organopolysiloxane-containing composition is cured by external energy to form the overclad portion 31. The optical waveguide 10 can be produced by the method disclosed above. Incidentally, as disclosed above, the terms "underclad" and "overclad" are merely used herein for the sake of

convenience. Herein, a portion covering the lower part of the core upon production is referred to as an underclad, and a portion covering the upper right and left of the core is referred to as an overclad, but in an aspect of use, the underclad and the overclad may be reversed upside down, or both may be integrated.

After the core portion and the clad portion of the optical waveguide have been formed on the substrate, the optical waveguide may be peeled off from the substrate.

The substrate disclosed above, which is a silicon wafer, a silicon wafer with an oxide film, a polyimide resin, an epoxy resin, a PEEK resin, a liquid crystal polymer, glass, a glass epoxy substrate, or the like, can be used. It is preferable to preliminarily subject a surface of the substrate to be used to ozone treatment, plasma treatment, corona treatment, or the like in order to remove a substance attached on the surface, prevent the organopolysiloxane-containing composition to be applied from being repelled, or improve the adhesiveness. Similarly, before forming of a core and before forming of a clad, it is preferable to preliminarily subject surfaces on which the core and the clad are to be formed to ozone treatment, plasma treatment, corona treatment, or the like.

In the first aspect, the maximum length (H) of the core portion in the thickness direction and the maximum length (L) thereof in the width direction in a cross section of the core portion of the optical waveguide core portion 20 can be controlled by, for example, a method for producing an optical waveguide. Specifically, in case of producing it by a photolithography process, the maximum length (H) of the core portion in the thickness direction can be controlled by adjusting a coating film thickness upon applying the organopolysiloxane-containing composition for forming the core portion 20. Then, using a photomask on which a line having a line width close to the assumed maximum length (H) of the core portion in the thickness direction is drawn, photolithography can be used so that H/L is controlled in a range of 0.4 to 3.

In the second aspect, the taper angle of the optical waveguide core portion 20 can be controlled by, for example, a method for producing an optical waveguide. Specifically, in case of producing it by a photolithography process, the taper angle can be controlled by adjusting the gap between a photomask and a coating film of the organopolysiloxane-containing composition for forming the core portion 20. For example, the taper angle can be reduced by increasing the gap.

Also, the taper angle can be controlled by adjusting a focus of exposure equipment.

The materials constituting the core portion and the clad portion are not particularly limited, but it is preferable that at least one of the core portion or the clad portion be made of a cured product produced by curing the organopolysiloxane-containing composition containing an organopolysiloxane having a polymerizable functional group, which is described above, it is more preferable that both be made of a cured product produced by curing the organopolysiloxane-containing composition, and it is still more preferable that the organopolysiloxane-containing composition be made of a cured product produced by curing the organopolysiloxane-containing composition containing an organopolysiloxane having a polymerizable alkenyl group.

The materials constituting the underclad portion 32 and the overclad portion 31 may be the same or different, but it is preferred to use organopolysiloxane-containing compositions having different refractive indices after curing. When materials having different refractive indices are used for the underclad portion 32 and the overclad portion 31, the condition of light confinement in the optical waveguide 10 can be controlled.

## Optical Member

The optical waveguide of the present invention has a reduced transmission loss and high patterning properties, and a thin line of, for example, 10 μm or less, can be easily drawn. Therefore, the optical waveguide can be suitably used for, for example, a single-mode optical waveguide. Further, the organopolysiloxane to be used as a raw material of the optical waveguide of the present invention exhibits high transparency in a near-infrared region, and therefore, is also suitably used for a near-infrared optical waveguide.

An optical member having the optical waveguide of the present invention is also within the scope of the present invention.

The optical member of the present invention may include a mirror, a connector, or other connection members to an optical fiber, a silicon photonics optical circuit, or the like, in addition to the optical waveguide and the near-infrared light waveguide described above.

## Examples

The present invention will be described in detail below by way of Examples but the present invention is not limited by the following Examples.

## Evaluation Method of Organopolysiloxane

(1) $^1$H-NMR Measurement Method

- Apparatus: AVANCE NEO 400, BBFO Probe (5 mm diameter), manufactured by Bruker Japan K. K.
- Measurement condition: Pulse repetition time of 5 seconds, number of scans of 16 times, measurement mode of single pulse, measurement temperature of 25°C, flip angle of 30°, spin of 20 Hz, and measurement temperature of 25°C.
- Preparation of sample: 60 mg of the organopolysiloxane to be measured was weighed out, and 12 mg of N, N-dimethylformamide was added as an internal standard. Further, deuterated chloroform was added to dissolve the mixture so that the total mass was 1 g, and the mixture was placed in an NMR sample tube.
- Calculation of functional group content: The functional group content was estimated from the ratio of the signal intensity of each component to the signal intensity of N, N-dimethylformamide as an internal standard, and the weighed value.

(2) $^{29}$Si-NMR Measurement Method

- Preparation of sample: Tris(2, 4-pentanedionato) chromium (III) was added to deuterated chloroform so that its concentration was 0.5 mass% to prepare a solvent for $^{29}$Si-NMR measurement. 1.5 g of the organopolysiloxane to be measured was weighed out, and 2.5 mL of the solvent for $^{29}$Si-NMR measurement disclosed above was added and dissolved therein, and the mixture was poured into an NMR sample tube.

  (2)-1: $^{29}$Si-NMR Measurement of Organopolysiloxanes A- 1, A- 2, and B-1 Described Below

  - Apparatus: JNM-ECS400 TUNABLE Probe (10 mm diameter): Si-free, AT 10 probe, manufactured by JEOL Ltd.
  - Measurement conditions: Pulse repetition time of 16 seconds, number of scans of 1024 times, measurement mode of non-gated decoupled pulse method (NNE), flip angle of 90°, spin of none, and measurement temperature of 25°C.

  (2)-2: $^{29}$Si-NMR Measurement of Organopolysiloxane B-2 Described Below

  - Apparatus: AVANCE NEO 600, BBO Cryo Probe (5 mm diameter) manufactured by Bruker Japan K. K.
  - Measurement conditions: Pulse repetition time of 16 seconds, number of scans of 1024 times, measurement mode of inverse gate decoupling measurement, flip angle of 90°, spin of none, and measurement temperature of 25°C.

Calculation of Constituent Unit

The signal intensity of each unit of silicon was measured, and the constituent ratio of the silicon unit was calculated from the ratio of the signal intensity of the unit of silicon to the signal intensity measured using the $^1$H-NMR disclosed above and the ratio of the signal intensity of the unit of silicon to the content of the functional group.

The organopolysiloxanes A-1 and A-2 to be used for forming the core portion were prepared by the following procedure.

Synthesis Example 1

Using 62.68 g of methyl silicate MS51 manufactured by Mitsubishi Chemical Corporation, 150.00 g of 3-methacryloyloxypropyltrimethoxysilane KBM-503 manufactured by Shin-Etsu Chemical Co., Ltd., 32.66 g of hexamethyldisiloxane manufactured by Nacalai Tesque Inc., 122.67 g of toluene and 122.67 g of methanol as solvents, and a mixture of 72.98 g of 1 N hydrochloride and 72.98 g of methanol as a catalyst and water, hydrolysis condensation was performed while maintaining the temperature of from 15°C to 40°C. Thereafter, the reaction liquid was neutralized, washed with demineralized water, the solvents and water were removed therefrom, and the remaining was filtered to produce 34 g of the target liquid organopolysiloxane A-1.

Synthesis Example 2

An organopolysiloxane A-2 was produced in the same manner as in Synthesis Example 1 except that 3-methacryloyloxypropyltrimethoxysilane KBM503 manufactured by Shin-Etsu Chemical Co., Ltd. and dimethoxydimethylsilane manufactured by Tokyo Chemical Industry Co., Ltd. were used.

The organopolysiloxanes B-1 and B-2 to be used for forming the clad portion were prepared by the following procedure.

Synthesis Example 3

An organopolysiloxane B-1 was produced in the same manner as in Synthesis Example 1 except that 104.65 g of methyl silicate MS51 manufactured by Mitsubishi Chemical Corporation, 125.00 g of 3-methacryloyloxypropyltrimethoxysilane KBM-503 manufactured by Shin-Etsu Chemical Co., Ltd., and 21.64 g of hexamethyldisiloxane manufactured by Nacalai Tesque, Inc. were used.

Synthesis Example 4

An organopolysiloxane B-2 was produced in the same manner as in Synthesis Example 1 except that 3-methacryloyloxypropyltrimethoxysilane KBM503 manufactured by Shin-Etsu Chemical Co., Ltd. and dimethoxydimethylsilane manufactured by Tokyo Chemical Industry Co., Ltd. were used.

Each proportion of the constituent unit of each organopolysiloxane obtained from the NMR measurement is shown in Table 1.

[Table 1]

Table 1

| Organopolysiloxane | Coefficient in Formula [1] | | | | | | | | |
|---|---|---|---|---|---|---|---|---|---|
| | M1 | M2 | D1 | D2 | T1 | T2 | Q | Y1 | Y2 |
| A-1 | 0.388 | 0 | 0 | 0 | 0 | 0.309 | 0.303 | 0.131 | 0 |
| A-2 | 0 | 0 | 0.501 | 0 | 0 | 0.499 | 0 | 0.134 | 0 |
| B-1 | 0.384 | 0 | 0 | 0 | 0 | 0.209 | 0.407 | 0.096 | 0 |
| B-2 | 0 | 0 | 0.653 | 0 | 0 | 0.347 | 0 | 0.092 | 0 |

The organopolysiloxane-containing composition to be used for forming an optical waveguide was prepared by the following procedure using the organopolysiloxane for forming the core portion.

A vessel was charged with 100 parts by mass of the organopolysiloxane to be used for forming the core portion, 2 parts by mass of 2-benzyl-2-(dimethylamino)-4'-morpholinobutyrophenone (Omnirad 369, manufactured by IGM Resins B. V.), 10 parts by mass of pentaerythritol tetrakis(3-mercaptobutyrate) (PE1 manufactured by Resonac Holdings Corp.), and 20 parts by mass of propylene glycol monomethyl ether acetate, and the mixture was stirred for 2 hours to produce the composition to be used for forming a polymer optical waveguide. A composition produced by the above disclosed procedure using the organopolysiloxane A-1 is referred to as C-1, and a composition produced by the above disclosed procedure using the organopolysiloxane A-2 without using PE1 is referred to as C-2.

The organopolysiloxane-containing composition to be used for forming an optical waveguide was prepared by the following procedure using the organopolysiloxane to be used for forming the clad portion.

A vessel was charged with 100 parts by mass of the organopolysiloxane to be used for forming the clad portion, 2 parts by mass of 2-benzyl-2-(dimethylamino)-4'-morpholinobutyrophenone (Omnirad 369, manufactured by IGM Resins B. V.), and 20 parts by mass of propylene glycol monomethyl ether acetate, and the mixture was stirred for 2 hours to produce the composition to be used for forming an optical waveguide. A composition produced by the above disclosed procedure using the organopolysiloxane B-1 is referred to as D-1, and a composition produced by the above disclosed procedure using the organopolysiloxane B-2 is referred to as D-2.

The refractive indices of the cured films fabricated from the organopolysiloxanes A-1, A-2, B-1, and B-2 at a wavelength of 1300 nm were measured by the following procedure.

Glass substrates were each coated with the composition C-1, C-2, D-1, or D-2 by spin coating, and the coating films were exposed to light with an LED having a wavelength of 365 nm at an accumulated light amount of 500 $mJ/cm^2$ to form cured films having a thickness of approximately 10 μm. The refractive indices of the resulting cured films were measured with a prism coupler (KPR-2000, manufactured by Metricon Corporation), and the refractive indices of the cured films fabricated from the compositions C-1, C-2, D-1, and D-2 at the 1300 nm wavelength were 1.459, 1.466, 1.441, and 1.456, respectively.

The following five optical waveguides were produced by the following procedure using the organopolysiloxane-containing composition to be used for forming the optical waveguide produced by the above disclosed procedure.

Example 1

An ozone-treated silicon wafer was used as a substrate, the composition D-1 was applied onto the substrate so that a thickness of the composition D-1 after curing by heat would be approximately 5 μm, and then the resultant was subjected to drying treatment to produce a coated substrate. Next, the resulting coating film was exposed to light without using a photomask (the intensity at a wavelength of 365 nm upon exposure to light was 40 mW/$cm^2$, and the exposure amount was 500 mJ/$cm^2$). Thereafter, the insufficiently cured portion of the coating film surface was removed using propylene glycol monomethyl ether acetate and then using 2-propanol, followed by drying. Through these operations, an underclad portion was formed on the substrate.

Next, the composition C-1 was applied onto the underclad portion so that a thickness of the composition after having been cured by heating would be approximately 5 to 7 μm. Thereafter, the resultant was subjected to drying treatment to produce a coated substrate. Next, the resulting coating film was exposed to light using a photomask (having a plurality of light exposure portions having a width of 3 to 10 μm and a length of 4 cm with a pitch of 125 μm) so that the intensity at a wavelength of 365 nm was 500 mW/$cm^2$ and the exposure amount was 1000 mJ/$cm^2$. Thereafter, the unexposed portion of the coating film was removed using propylene glycol monomethyl ether acetate and then using 2-propanol, followed by drying. Through these operations, a substrate having the core portion formed on the underclad portion (a core substrate with the underclad) was formed.

Next, the composition D-1 was applied onto the core substrate with the underclad so that a thickness of the composition after having been cured by heating would be approximately 10 μm. Thereafter, the resultant was subjected to drying treatment to produce a coated substrate. Next, the resulting coating film was exposed to light without using a photomask (the intensity at a wavelength of 365 nm upon light exposure was 40 mW/$cm^2$ and the exposure amount was 500 mJ/$cm^2$). Thereafter, the insufficiently cured portion of the coating film surface was removed using propylene glycol monomethyl ether acetate and then using 2-propanol, followed by drying. Finally, the resultant was cured by heating at 150°C for 1 hour to produce an optical waveguide sample X-1 having a structure of the underclad/core/overclad.

Example 2

An optical waveguide sample X-2 was produced in the same manner as in Example 1 except that C-2 was used as the composition for forming a core portion and D-2 was used as the composition for forming a clad portion.

Comparative Example 1

A silicon wafer was used as a substrate, the composition C-1 was applied onto the substrate so that a thickness of the composition after having been cured by heating would be approximately 5 to 7 μm, and then the resultant was subject to drying treatment. Next, the resulting coating film was exposed to light using the same photomask as in Example 1 so that the intensity at a wavelength of 365 nm was 500 mW/$cm^2$ and the exposure amount was 1000 mJ/$cm^2$. Thereafter, the unexposed portion of the coating film was removed using propylene glycol monomethyl ether acetate and then using 2-propanol, followed by drying, to produce a substrate having a core portion formed thereon. Next, the composition D-1 was applied onto the substrate having the core portion so that a thickness of the composition after having been cured by heating would be approximately 10 μm and then dried to produce a coated substrate. Next, the resulting coating film was exposed to light without using a photomask (the intensity at a wavelength of 365 nm upon light exposure was 40 mW/$cm^2$ and the exposure amount was 500 mJ/$cm^2$). Thereafter, the insufficiently cured portion of the coating film surface was removed using propylene glycol monomethyl ether acetate and then using 2-propanol, followed by drying. Finally, the resultant was cured by heating at 150°C for 1 hour to produce an optical waveguide sample Y-1 without an underclad portion as compared with that of Example 1.

Comparative Example 2

A silicon wafer was used as a substrate, the composition D-1 was applied onto the substrate so that a thickness of the composition after having been cured by heating would be approximately 5 μm, and then the resultant was subject to drying treatment to produce a coated substrate. Next, the resulting coating film was exposed to light without using a photomask (the intensity at a wavelength of 365 nm upon exposure to light was 40 mW/$cm^2$, and the exposure amount was 500 mJ/$cm^2$). Thereafter, the insufficiently cured portion of the coating film surface was removed using propylene glycol monomethyl ether acetate and then using 2-propanol, followed by drying. Through these operations, an underclad portion was formed on the substrate.

Next, the composition C-1 was applied onto the underclad portion so that a thickness of the composition after having been cured by heating would be approximately 3 to 4 μm. Thereafter, the resultant was subjected to drying treatment to produce a coated substrate. Next, the resulting coating film was exposed to light using the same photomask as in Example 1 so that the intensity at a wavelength of 365 nm was 500 mW/cm$^2$ and the exposure amount was 1000 mJ/cm$^2$. Thereafter, the unexposed portion of the coating film was removed using propylene glycol monomethyl ether acetate and then using 2-propanol, followed by drying. Through these operations, a substrate having the core portion formed on the underclad portion (a core substrate with the underclad) was formed.

Next, the composition D-1 was applied onto the core substrate with the underclad so that a thickness of the composition after having been cured by heating would be approximately 10 μm. Thereafter, the resultant was subjected to drying treatment to produce a coated substrate. Next, the resulting coating film was exposed to light without using a photomask (the intensity at a wavelength of 365 nm upon light exposure was 40 mW/cm$^2$ and the exposure amount was 500 mJ/cm$^2$). Thereafter, the insufficiently cured portion of the coating film surface was removed using propylene glycol monomethyl ether acetate and then using 2-propanol, followed by drying. Finally, the resultant was cured by heating at 150°C for 1 hour to produce an optical waveguide sample Y-2 having a structure of the underclad/core/overclad.

Comparative Example 3

A silicon wafer was used as a substrate, the composition D-1 was applied onto the substrate so that a thickness of the composition after having been cured by heating would be approximately 5 μm, and then the resultant was subject to drying treatment to produce a coated substrate. Next, the resulting coating film was exposed to light without using a photomask (the intensity at a wavelength of 365 nm upon exposure to light was 40 mW/cm$^2$, and the exposure amount was 500 mJ/cm$^2$). Thereafter, the insufficiently cured portion of the coating film surface was removed using propylene glycol monomethyl ether acetate and then using 2-propanol, followed by drying. Through these operations, an underclad portion was formed on the substrate.

Next, the composition C-1 was applied onto the underclad portion so that a thickness of the composition after having been cured by heating would be approximately 5 to 7 μm. The resultant was subject to drying treatment to produce a coated substrate. Next, the resulting coating film was exposed to light using the same photomask as in Example 1 so that the intensity at a wavelength of 365 nm was 500 mW/cm$^2$ and the exposure amount was 1000 mJ/cm$^2$ under the condition that the gap between the photomask and the coating film was larger than those in Examples 1 and 2 and Comparative Example 1. Thereafter, the unexposed portion of the coating film was removed using propylene glycol monomethyl ether acetate and then using 2-propanol, followed by drying. Next, the composition D-1 was applied onto the core substrate with the underclad so that a thickness of the composition after having been cured by heating would be approximately 10 μm, and then the resultant was subjected to drying treatment to produce a coated substrate. Next, the resulting coating film was exposed to light without using a photomask (the intensity at a wavelength of 365 nm upon light exposure was 40 mW/cm$^2$ and the exposure amount was 500 mJ/cm$^2$). Thereafter, the insufficiently cured portion of the coating film surface was removed using propylene glycol monomethyl ether acetate and then using 2-propanol, followed by drying. Finally, the resultant was cured by heating at 150°C for 1 hour to produce an optical waveguide sample Y-3 having a structure of the underclad/core/overclad and a smaller taper angle than that in Example 1.

H/L of the core portion of each of the optical waveguide samples X-1, X-2, Y-1, and Y-2 produced by the above disclosed procedure was measured by the following procedure.

An end of the optical waveguide was cut out, and the cross section of the resulting sample piece was observed with an SEM (SU1510, manufactured by Hitachi High-Technologies Corporation). Provided that, in the cross section of the core portion, L [μm] is the maximum length of the cross section of the core portion in the width direction, H [μm] is the maximum length of the cross section of the core portion in the thickness direction, H/L was calculated. The core portions of the optical waveguide samples X-1 and Y-1 had an H/L of 0.48. Also, the H/L of the core portion of the optical waveguide sample X-2 was 0.69. The core portion of the optical waveguide sample Y-2 had an H/L of 0.38.

The taper angle of the core portion of each of the optical waveguide samples X-1, X-2, Y-1, and Y-3 produced by the above disclosed procedure was measured by the following procedure.

An end of the optical waveguide was cut out, and the cross section of the resulting sample piece was observed with an SEM (SU1510, manufactured by Hitachi High-Technologies Corporation). The taper angle of the core portion of each of the optical waveguide samples X-1 and Y-1 was 83°. The taper angle of the core portion of the optical waveguide sample X-2 was 83°. The taper angle of the core portion of the optical waveguide sample Y-3 was 47°.

The transmission losses of the optical waveguide samples X-1, X-2, and Y-1 and the connection losses of the optical waveguide samples X-1 and X-2 produced by the above disclosed procedure were measured by the following procedure.

Both ends of the optical waveguide were cut out to prepare samples having several optical path lengths, and a single mode fiber was connected to both ends of the sample. For each sample, a temperature-controlled fiber-output high-power LD stabilized laser source (LDS1005) manufactured by PRECISE GAUGE Co., Ltd. was connected to a single

mode fiber on the light incident side, and a power meter (MT9810B) manufactured by ANRITSU CORPORATION was connected to a single mode fiber on the light emission side, and the insertion loss of the sample was measured. The transmission loss was calculated from a change in insertion loss with respect to an optical path length, and the transmission losses of the optical waveguide samples X-1 and X-2 were 0.31 dB/cm and 0.30 dB/cm, respectively. The transmission loss of the optical waveguide sample Y-1 was, on the other hand, 1.5 dB/cm. Also, the connection loss was calculated from the intercept of an approximate straight line of a graph in which waveguide lengths are taken along the horizontal axis and insertion losses are taken along the vertical axis. The connection losses of the optical waveguides X-1 and X-2 were 2.00 dB and 1.20 dB, respectively.

The polarization dependent losses of the optical waveguide samples X-1, X-2, Y-2, and Y-3 produced by the above disclosed procedure were measured by the following procedure.

Both ends of the optical waveguide were cut out to fabricate a sample having an optical path length of approximately 3 cm, and a single mode fiber was connected to both ends of the sample. A temperature-controlled fiber-output high-power LD stabilized laser source (LDS1005) manufactured by PRECISE GAUGE Co., Ltd. was connected to a single mode fiber on the light incident side, and a power meter (MT9810B) manufactured by ANRITSU CORPORATION was connected to a single mode fiber on the light emission side. Using a polarized light controller (FPC561) manufactured by Thorlabs, Inc., the polarized state of light incident on the sample was varied to measure a polarization dependent loss. The polarization dependent losses of the optical waveguide samples X-1, X-2, Y-2, and Y-3 were 0.2 dB, 0.3 dB, 0.6 dB, and 0.6 dB, respectively.

[Table 2]

Table 2

| | | Example | | Comparative Example | | |
|---|---|---|---|---|---|---|
| | | 1 | 2 | 1 | 2 | 3 |
| Optical waveguide | | X-1 | X-2 | Y-1 | Y-2 | Y-3 |
| Core | Composition | C-1 | C-2 | C-1 | C-1 | C-1 |
| | Refractive index at wavelength of 1300 nm | 1.459 | 1.466 | 1.459 | 1.459 | 1.459 |
| | Thickness | 5 to 7 μm | 5 to 7 μm | 5 to 7 μm | 3 to 4 μm | 5 to 7 μm |
| | Aspect ratio (H/L) | 0.48 | 0.69 | 0.48 | 0.38 | - |
| | Taper angle | 83° | 83° | 83° | - | 47° |
| Clad | Underclad composition | D-1 | D-2 | - | D-1 | D-1 |
| | Refractive index at wavelength of 1300 nm | 1.441 | 1.456 | | 1.441 | 1.441 |
| | Thickness | 5 μm | 5 μm | | 5 μm | 5 μm |
| | Overclad composition | D-1 | D-2 | D-1 | D-1 | D-1 |
| | Refractive index at wavelength of 1300 nm | 1.441 | 1.456 | 1.441 | 1.441 | 1.441 |
| | Thickness | 10 μm | 10 μm | 10 μm | 10 μm | 10 μm |
| Transmission loss (dB/cm) | | 0.31 | 0.30 | 1.5 | - | - |
| Polarization dependent loss (dB) | | 0.2 | 0.3 | - | 0.6 | 0.6 |
| Connection loss (dB) | | 2.00 | 1.20 | - | - | - |

Discussion of Results

The optical waveguide samples X-1 and X-2 having the underclad portion have a significantly reduced transmission loss as compared with the optical waveguide sample Y-1 without the underclad portion. As a result,

providing the underclad portion makes light propagating through the core portion efficiently confined in the core portion, achieving high light propagation performance.

Further, the comparison between the optical waveguide samples X-1 and X-2 in which H/L in the shape of the cross-section of the core portion is 0.4 or more and the optical waveguide sample Y-2 in which H/L is less than 0.4, as well as the comparison between the optical waveguide samples X-1 and X-2 in which the taper angle in the shape of the cross-section of the core portion is 50° or more and 130° or less and the optical waveguide sample Y-3 in which the taper angle is less than 50° indicate that the near field pattern on the light emission side of the core approaches to a perfect circle, and thus, the polarization dependent loss in light propagation in the core portion can be reduced.

Industrial Applicability

The optical waveguide of the present invention has a reduced transmission loss and a reduced polarization dependent loss at the same time, and exhibits favorable light propagation characteristics. Due to these characteristics, the optical waveguide of the present invention can be used for optical members and the like including optical interconnection applications.

Reference Signs List

10 Optical waveguide
20 Core portion
30 Clad portion
31 Overclad portion
32 Underclad portion
40 Taper angle

## Claims

**1.** An optical waveguide comprising:

a core portion configured to propagate light; and
a clad portion having a refractive index lower than that of the core portion,
wherein
the clad portion has an underclad portion partially in contact with the core portion, and
in a shape of a cross-section of the core portion in a direction perpendicular to a light propagation direction, H/L is 0.4 to 3, with the proviso that a width direction is a direction of a line along which the core portion and the underclad portion are in contact with each other, a thickness direction is a direction perpendicular to the width direction, L [μm] is a maximum length of the cross-section of the core portion in the width direction, and H [μm] is a maximum length of the cross-section of the core portion in the thickness direction,
and
at least one of the core portion or the clad portion is made of a cured product produced by curing an organopolysiloxane-containing composition containing an organopolysiloxane having a polymerizable functional group represented by Formula [1]:

$$(R^1R^2R^3SiO_{1/2})_{M1}(R^4R^5R^6SiO_{1/2})_{M2}$$

$$(R^7R^8SiO_{2/2})_{D1}\ (R^9R^6SiO_{2/2})_{D2}$$

$$(R^{10}SiO_{3/2})_{T1}(R^6SiO_{3/2})_{T2}(SiO_{4/2})_Q$$

$$(O_{1/2}R^{11})_{Yl}(O_{1/2}R^6)_{Y2} \cdots \qquad [1]$$

where
$R^1$ to $R^5$, and $R^7$ to $R^{11}$ are each independently at least one type of group selected from the group consisting of an organic group and a hydrogen atom;
$R^1$ to $R^3$, $R^7$, $R^8$, $R^{10}$ and $R^{11}$ are free of a polymerizable functional group;

$R^6$ is at least one type of organic group including a polymerizable functional group, and when a plurality of $R^6$ groups are present, they may be the same or different from each other; and $0 \leq M1$, $0 \leq D1$, $0 \leq T1$, $0 \leq Y1$, $0 \leq Y2$, $0 \leq Q$,

$$0 < M2 + D2 + T2,$$

$$0 < D1 + D2 + T1 + T2 + Q,$$

and

$$M1 + M2 + D1 + D2 + T1 + T2 + Q = 1$$

are satisfied.

**2.** An optical waveguide comprising:

a core portion configured to propagate light; and
a clad portion having a refractive index lower than that of the core portion,
wherein
the clad portion has an underclad portion partially in contact with the core portion, and
in a shape of a cross-section of the core portion in a direction perpendicular to a light propagation direction, a taper angle of the core portion is 50° or more and 130° or less, with a proviso that a width direction is a direction of a line along which the core portion and the underclad portion are in contact with each other, a thickness direction is a direction perpendicular to the width direction, and the taper angle of the core portion is an angle formed by the underclad and a tangent line of a core side portion, drawn at its position corresponding to a length of 1/2 of a maximum length of the core portion in the thickness direction, and
at least one of the core portion or the clad portion is made of a cured product produced by curing an organopolysiloxane-containing composition containing an organopolysiloxane having a polymerizable functional group represented by Formula [1]:

$$(R^1R^2R^3SiO_{1/2})_{M1}(R^4R^5R^6SiO_{1/2})_{M2}$$
$$(R^7R^8SiO_{2/2})_{D1}\ (R^9R^6SiO_{2/2})_{D2}$$
$$(R^{10}SiO_{3/2})_{T1}(R^6SiO_{3/2})_{T2}(SiO_{4/2})_Q$$
$$(O_{1/2}R^{11})_{Yl}(O_{1/2}R^6)_{Y2} \cdots \qquad [1]$$

where
$R^1$ to $R^5$, and $R^7$ to $R^{11}$ are each independently at least one type of group selected from the group consisting of an organic group and a hydrogen atom;
$R^1$ to $R^3$, $R^7$, $R^8$, $R^{10}$ and $R^{11}$ are free of a polymerizable functional group;
$R^6$ is at least one type of organic group including a polymerizable functional group, and when a plurality of $R^6$ groups are present, they may be the same or different from each other; and $0 \leq M1$, $0 \leq D1$, $0 \leq T1$, $0 \leq Y1$, $0 \leq Y2$, $0 \leq Q$,

$$0 < M2 + D2 + T2,$$

$$0 < D1 + D2 + T1 + T2 + Q,$$

and

$$M1 + M2 + D1 + D2 + T1 + T2 + Q = 1$$

are satisfied.

3. The optical waveguide according to claim 1 or 2, wherein a difference in refractive index between the core portion and the clad portion is 0.005 or more and 0.05 or less.

4. The optical waveguide according to claim 1 or 2, wherein in the shape of the cross-section of the core portion in the direction perpendicular to the light propagation direction, the underclad portion has a length of 1 μm or more in the thickness direction.

5. The optical waveguide according to claim 1 or 2, wherein the clad portion has an overclad portion present in a portion of the core portion not in contact with the underclad portion.

6. The optical waveguide according to claim 1 or 2, wherein a refractive index of the core portion at a wavelength of 1300 nm is 1.400 or more and 1.520 or less.

7. The optical waveguide according to claim 1 or 2, wherein the organopolysiloxane having a polymerizable functional group is represented by Formula [2]:

$$(R^1R^2R^3SiO_{1/2})_{M1}(R^4R^5R^6SiO_{1/2})_{M2}$$

$$(R^7R^8SiO_{2/2})_{D1}\ (R^9R^6SiO_{2/2})_{D2}$$

$$(R^{10}SiO_{3/2})_{T1}(R^6SiO_{3/2})_{T2}(SiO_{4/2})_Q$$

$$(O_{1/2}R^{11})_{Y1}(O_{1/2}R^6)_{Y2} \cdots \qquad [2]$$

where

$R^1$ to $R^5$, and $R^7$ to $R^{11}$ are each independently at least one type of group selected from the group consisting of an organic group and a hydrogen atom;
$R^1$ to $R^3$, $R^7$, $R^8$, $R^{10}$ and $R^{11}$ are free of a polymerizable functional group;
$R^6$ is at least one type of organic group containing a polymerizable functional group, and when a plurality of $R^6$ groups are present, they may be the same or different from each other; and
$0 \leq M1$, $0 \leq D1$, $0 \leq T1$, $0 \leq Y1$, $0 \leq Y2$,

$$0 < Q,$$

$$0 < M2 + D2 + T2,$$

and

$$M1 + M2 + D1 + D2 + T1 + T2 + Q = 1$$

are satisfied.

8. The optical waveguide according to claim 1 or 2, wherein the organopolysiloxane having a polymerizable functional group is represented by Formula [3]:

$$(R^1R^2R^3SiO_{1/2})_{M1}(R^4R^5R^6SiO_{1/2})_{M2}$$

$$(R^7R^8SiO_{2/2})_{D1}\ (R^9R^6SiO_{2/2})_{D2}$$

$$(R^{10}SiO_{3/2})_{T1}(R^6SiO_{3/2})_{T2}$$

$$(O_{1/2}R^{11})_{Y1}(O_{1/2}R^6)_{Y2} \cdots \qquad [3]$$

where

$R^1$ to $R^5$, and $R^7$ to $R^{11}$ are each independently at least one type of group selected from the group consisting of an organic group and a hydrogen atom;
$R^1$ to $R^3$, $R^7$, $R^8$, $R^{10}$ and $R^{11}$ are free of a polymerizable functional group;
$R^6$ is at least one type of organic group including a polymerizable functional group, and when a plurality of $R^6$ groups are present, they may be the same or different from each other; and
$0 \leq M1$, $0 \leq D1$, $0 \leq T1$, $0 \leq Y1$, $0 \leq Y2$,

$$0 < M2 + D2 + T2,$$

$$0 < D1 + D2 + T1 + T2,$$

and

$$M1 + M2 + D1 + D2 + T1 + T2 = 1$$

are satisfied.

**9.** The optical waveguide according to claim 1 or 2, wherein $0.02 \leq Y1 \leq 0.25$ is satisfied in Formula [1].

**10.** The optical waveguide according to claim 1 or 2, wherein $0 < M2 + D2 + T2 \leq 0.25$ is satisfied in Formula [1].

**11.** The optical waveguide according to claim 1 or 2, wherein $0.12 < M2 + D2 + T2 \leq 0.25$ is satisfied in Formula [1].

**12.** The optical waveguide according to claim 7, wherein $0.02 \leq Y1 \leq 0.25$ is satisfied in Formula [2].

**13.** The optical waveguide according to claim 7, wherein $0.04 \leq Q$ is satisfied in Formula [2].

**14.** The optical waveguide according to claim 8, wherein $0 < D1 + D2$ is satisfied in Formula [3].

**15.** The optical waveguide according to claim 8, wherein $0.1 < D1 + D2$ is satisfied in Formula [3].

**16.** The optical waveguide according to claim 8, wherein $0 < D1$ is satisfied in Formula [3].

**17.** The optical waveguide according to claim 8, wherein $0.02 \leq Y1 \leq 0.25$ is satisfied in Formula [3].

**18.** The optical waveguide according to claim 8, wherein $0 < T1 + T2$ is satisfied in Formula [3].

**19.** The optical waveguide according to claim 8, wherein $0 < D1 + D2$ and $0 < T1 + T2$ are satisfied in Formula [3].

**20.** The optical waveguide according to claim 1 or 2, wherein $R^6$ comprises a polymerizable alkenyl group.

**21.** The optical waveguide according to claim 1 or 2, wherein $R^6$ comprises an acryloyl group and/or a methacryloyl group.

**22.** The optical waveguide according to claim 1 or 2, wherein the organopolysiloxane having a polymerizable functional group is free of an aromatic structure.

**23.** The optical waveguide according to claim 1 or 2, wherein $R^6$ is an acryloyloxypropyl group and/or a methacryloyloxypropyl group.

**24.** The optical waveguide according to claim 1 or 2, which is for use in single mode.

**25.** An optical member having the optical waveguide described in claim 1 or 2.

Fig. 1

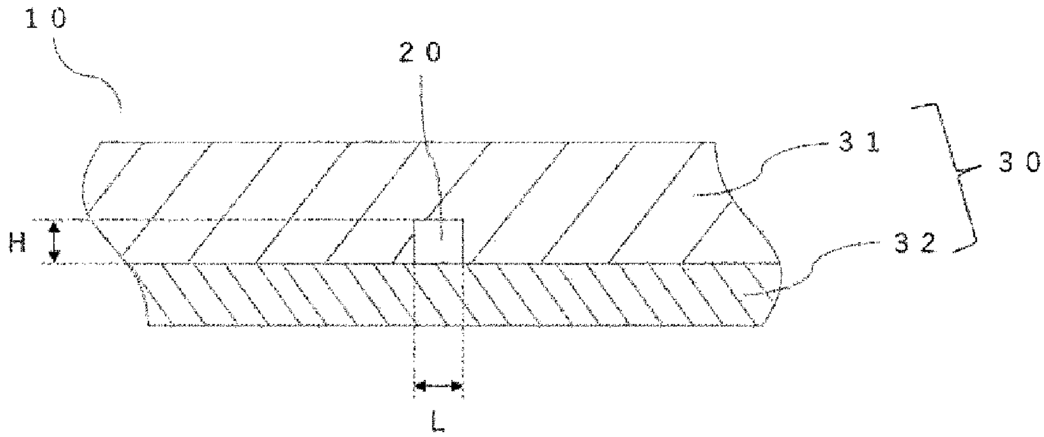


Fig. 2

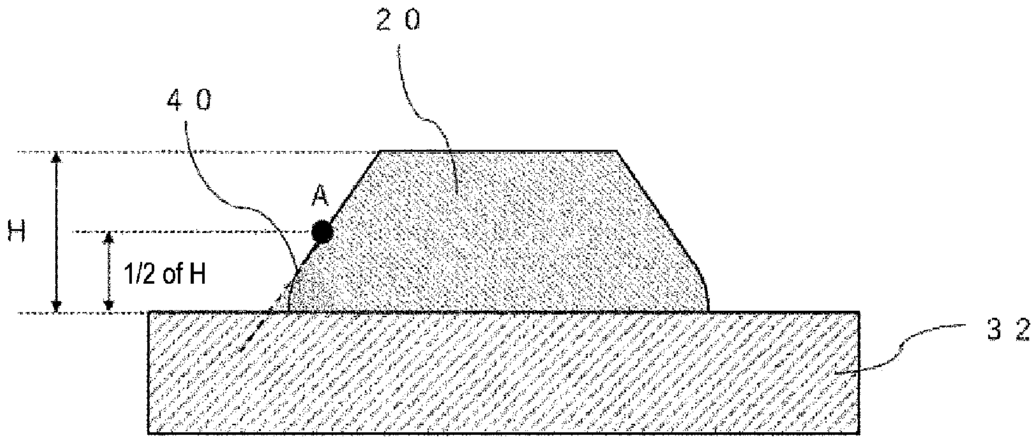

# INTERNATIONAL SEARCH REPORT

International application No.
**PCT/JP2024/032124**

## A. CLASSIFICATION OF SUBJECT MATTER

***G02B 6/12***(2006.01)i; ***C08F 299/06***(2006.01)i; ***C08F 299/08***(2006.01)i; ***C08G 77/04***(2006.01)i; ***C08G 77/06***(2006.01)i; ***C08G 77/20***(2006.01)i; ***G02B 6/122***(2006.01)i
FI: G02B6/12 371; C08F299/06; C08F299/08; C08G77/04; C08G77/06; C08G77/20; G02B6/122

According to International Patent Classification (IPC) or to both national classification and IPC

## B. FIELDS SEARCHED

Minimum documentation searched (classification system followed by classification symbols)

G02B6/12-6/14; C08F283/01; C08F290/00-290/14; C08F299/00-299/08; C08G77/00-77/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X<br><br>Y | JP 2005-227701 A (DOW CORNING CORP.) 25 August 2005 (2005-08-25)<br>paragraphs [0007]-[0040], fig. 1-7 | 1-8, 10-11, 13-16, 18, 20, 22, 24-25<br>9, 12, 17, 19, 21, 23 |
| Y | JP 2003-227949 A (SHIN-ETSU CHEMICAL CO., LTD.) 15 August 2003 (2003-08-15)<br>paragraphs [0008]-[0064] | 9, 12, 17, 21, 23 |
| Y | WO 2015/037571 A1 (TOAGOSEI CO., LTD.) 19 March 2015 (2015-03-19)<br>paragraphs [0011]-[0081] | 9, 12, 17, 19, 21, 23 |
| Y | JP 2022-157239 A (MITSUBISHI CHEMICAL CORPORATION) 14 October 2022 (2022-10-14)<br>paragraphs [0031]-[0047] | 9, 12, 21, 23 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 November 2024** | **26 November 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2024/032124**

| Patent document cited in search report | Publication date (day/month/year) | Patent family member(s) | Publication date (day/month/year) |
|---|---|---|---|
| JP 2005-227701 A | 25 August 2005 | (Family: none) | |
| JP 2003-227949 A | 15 August 2003 | US 2003/0148226 A1<br>paragraphs [0016]-[0080] | |
| WO 2015/037571 A1 | 19 March 2015 | US 2016/0200842 A1<br>paragraphs [0012]-[0130]<br>KR 10-2016-0055155 A | |
| JP 2022-157239 A | 14 October 2022 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018168783 A